# EUROPEAN PATENT APPLICATION

(11) **EP 4 715 589 A1**
(43) Date of publication of application: **25.03.2026**
(21) Application number: 25190898.4
(22) Date of filing: 22.07.2025
(51) Int. Cl.: G06F 9/48, G06F 9/54, G06F 40/00, G06N 20/00

(54) **ARTIFICIAL INTELLIGENCE ACCESS LAYER FOR APPLICATION CONTROL**

(30) Priority: 24.09.2024 US 202418894246
(71) Applicant: SAP SE, 69190 Walldorf (DE)
(72) Inventor: PLAZAS, Felipe Hernandez, 69190 Walldorf (DE); DITTRICH, Bernd, 69190 Walldorf (DE)
(74) Representative: Müller-Boré & Partner Patentanwälte PartG mbB

(57) **Abstract**

Systems and methods described herein relate to a generative artificial intelligence (AI) access layer that is implemented for dynamic control of a software application. Input is received from the software application. A generative AI model is used to detect a relevant capability based on the input. Prompt data is generated based on generative AI scenario settings for the relevant capability. The prompt data includes at least some of the input and context data accessible to the software application. A capability result is generated by using the generative AI model to process the prompt data. The generation of the capability result is dynamically controlled using the generative AI scenario settings. The software application executes the relevant capability based on the capability result. Output is presented within a user interface of the software application.

## Description

### TECHNICAL FIELD

The subject matter disclosed herein generally relates to the execution and control of software application capabilities. More specifically, but not exclusively, the subject matter relates to systems and methods for providing a generative artificial intelligence (AI) access layer for dynamic control of software applications.

### BACKGROUND

Many software products have complex and technical interfaces that can be challenging for users to navigate in an efficient manner. A user may need to input detailed and precise technical commands to execute desired functionality, with limited automation of capabilities supported by a software application. These and other technical issues can create a barrier for users, slowing down decision-making processes, introducing errors, and reducing overall operational efficiency in dynamic environments.

### BRIEF DESCRIPTION OF THE DRAWINGS

Some examples are shown for purposes of illustration and not limitation in the figures of the accompanying drawings. In the drawings, which are not necessarily drawn to scale, like numerals may describe similar components in different views or examples. To identify the discussion of any particular element or act more easily, the most significant digit or digits in a reference number refer to the figure number in which that element is first introduced.
FIG. 1 is a diagrammatic representation of a network environment that includes a generative AI access layer, according to some examples.
FIG. 2 is a flowchart illustrating operations of a method for using a generative AI access layer to facilitate the controlling of a software application, according to some examples.
FIG. 3 is a block diagram of certain components of a system including a software application, according to some examples.
FIG. 4 is a block diagram of certain components of a system including a generative AI access layer and an AI integration system, according to some examples.
FIG. 5A is a swimlane flowchart illustrating operations performed by a software application, a generative AI access layer, and an AI integration system, respectively, in a first part of a method to control operation of the software application, according to some examples.
FIG. 5B is a swimlane flowchart illustrating operations performed by the software application, the generative AI access layer, and the AI integration system of FIG. 5A in a second part of the method of FIG. 5A.
FIG. 6A is a swimlane flowchart illustrating operations performed by a user device, a software application, a generative AI access layer, and an AI integration system, respectively, in a first part of a method to control operation of the software application, according to some examples.
FIG. 6B is a swimlane flowchart illustrating operations performed by the user device, the software application, the generative AI access layer, and the AI integration system of FIG. 6B in a second part of the method of FIG. 6A.
FIG. 7 is a user interface diagram that shows a user interface of a transportation management software application that includes an AI interaction section, according to some examples, wherein the user interface is shown at a first stage.
FIG. 8 is a user interface diagram that shows the user interface of FIG. 7 at a second stage, according to some examples.
FIG. 9 is a user interface diagram that shows the user interface of FIG. 7 at a third stage, according to some examples.
FIG. 10 is a user interface diagram that shows the user interface of FIG. 7 at a fourth stage, according to some examples.
FIG. 11 diagrammatically illustrates training and use of a machine learning program, according to some examples.
FIG. 12 is a block diagram showing a software architecture for a computing device, according to some examples.
FIG. 13 is a block diagram of a machine in the form of a computer system, according to some examples, within which instructions may be executed for causing the machine to perform any one or more of the methodologies discussed herein.

### DETAILED DESCRIPTION

Examples in the present disclosure enable users to utilize capabilities of a software application in a more intuitive manner, thereby making interactions with the software application easier, more flexible, and more efficient. In some examples, capabilities can be triggered by leveraging generative AI to process natural language input (e.g., a plain language instruction) instead of relying on a user to provide structured, highly precise, or complex technical inputs.

Examples describe a generative AI access layer that can be integrated into various different types of applications without extensive changes or redevelopment. In some examples, an interface is provided to transform natural language inputs into system-readable data, such as a list of actions that can be used by a software application to execute corresponding capabilities without further user input. Predefined prompt structures are utilized to enable generative AI models to trigger or facilitate the execution of capabilities.

Technical solutions described herein can improve user accessibility, operational adaptability, capability execution speed, and overall system efficiency. Examples in the present disclosure allow for effective handling of both natural language user inputs and predetermined system inputs from a software application. In this way, user interaction-driven capabilities and autonomous operational capabilities of a software application can both be improved.

A transportation management software application is described as an example of a software application in the present disclosure. It will be appreciated that while systems and methods described herein can include or be applied to a transportation management software application, a software application of this type is a non-limiting example. The transportation management software application is described to illustrate certain aspects of the present disclosure, but systems and methods described herein may also include or be applied to other types of software applications, such as enterprise resource management applications, design tool applications, human resources applications, supply chain management applications, maintenance applications, and various others.

A "capability" of a software application, as used herein, may include a specific functionality, tool, or action that can be executed by the software application. A capability can be executed in response to user input or system input. In a transportation management software application, for example, capabilities might include planning freight units on trucks or calculating emissions for freight orders.

An example method includes receiving input from a software application. The input may be natural language user input provided during a user session, or system input generated by the software application. In response to receiving the input, a request is transmitted to a generative AI model to detect at least one relevant capability from among a plurality supported capabilities of the software application. The generative AI model may detect the relevant capability and identify context data needed to execute or trigger the relevant capability. In some examples, the request comprises a first call to the generative AI model that uses first prompt data, including the input, for classification purposes.

The method includes, after detecting a relevant capability, generating a capability result for the relevant capability. In some examples, the generation of the capability result is dynamically controlled using generative AI scenario settings. The generation of the capability result can include one or more further requests to the generative AI model, including the use of second prompt data that includes context data and at least some of the input.

Context data may include information accessible to the software application that is used to provide additional context to the generative AI model (e.g., in addition to the main input). Prompt data may include interaction history data that includes one or more previous inputs received from the software application.

After a capability result is generated for the relevant capability, the software application may execute the relevant capability based on the capability result. In some examples, the execution of the relevant capability results in output that is presented to a user (e.g., within a user interface provided by the software application).

Where multiple relevant capabilities are detected, the method may include generating a capability result for each relevant capability, with the software application executing the relevant capabilities based on the respective capability results. In some examples, at least some of the capability results are generated in parallel (or partially in parallel). In some examples, at least some of the relevant capabilities are executed in parallel (or partially in parallel).

"Generative AI scenario settings," as used herein, may include settings, configurations, or parameters that control the behavior and execution of a generative AI scenario. For example, the generative AI scenario settings include prompt settings for generating prompt data, function call settings for handling automated function calls, and memory settings that define how to temporarily retain user interactions in memory. Generative AI scenario settings may also include model parameters, such as a specific model to be used, temperature settings, or maximum token limits.

In some examples, the method includes generating a scenario object for the generative AI scenario. A scenario object may be a component generated within a generative AI access layer to define and implement behavior of the generative AI scenario. In some examples, the method includes accessing a generative AI profile associated with the software application, and instantiating the scenario object based on the generative AI profile to define the generative AI scenario settings for the user session.

The generative AI profile may define the supported capabilities of the software application and provide access to various settings and information, such as model settings and prompt structures for dynamically interacting with the generative AI model. Accordingly, in some examples, a scenario object is generated based on a stored generative AI profile for the software application.

In some examples, each relevant capability detected by the generative AI model is handled by way of its own scenario object. The method may include, for each relevant capability, instantiating a capability-specific scenario object for the relevant capability. Such a capability-specific scenario object can include capability-specific scenario settings to control the generating of the respective capability result for that specific capability.

A capability-specific scenario object may thus include a specialized instance of a scenario object that is tailored to a particular capability within the software application. For example, in a transportation management software application, a capability-specific scenario object might be instantiated for a capability such as planning freight units on trucks or calculating emissions for freight orders.

The capability-specific scenario object may be used to retrieve context data specific to the relevant capability from a context dataset associated with the software application, and to execute the specific logic for that capability. In some examples, the generative AI model identifies, for each relevant capability, the specific context data to be provided based on the capability-specific scenario settings for that relevant capability. The method may include instantiating at least one context handling object to retrieve the context data from a context dataset.

The method may include extracting specific parts of the input and associating respective parts with different capabilities of the software application. For example, the generative AI model processes the user input to detect both a first portion of the user input that is associated with a first capability and a second portion of the user input that is associated with a second capability. The first portion is then used in a generative AI scenario of the first capability (e.g., in a first capability-specific scenario object), while the second portion is used separately in a generative AI scenario of the second capability (e.g., in a second capability-specific scenario object).

As mentioned, the method may include generating a capability result which is used by the software application to perform the relevant capability. Where multiple capability results are generated, the method may include consolidating the respective capability results for the plurality of relevant capabilities into a structured set of capability results, and processing, by the software application, the structured set of capability results to cause execution of the plurality of relevant capabilities.

A "capability result," as used herein, may include a result or output generated using a generative AI access layer, or components thereof, as described in the present disclosure. In some examples, the capability result is generated by, or with the assistance of, a generative AI model. A capability result may contain structured data that provides parameter values for executing the relevant capability within the software application. For example, in a transportation management software application, a capability result might include a list of one or more actions to be performed, such as assigning specific freight units to particular trucks or enriching freight order lists with additional information, together with specific information (e.g., values) needed to perform the actions.

In some examples, the generative AI scenario settings include prompt settings for generating prompt data as well as function call settings for handling automated function calls. In some examples, a generative AI access layer automatically executes a function call based on both the function call settings and a response received from the generative AI model. For example, the generative AI model uses input provided by a user, as well as context data and task information from the generative AI scenario settings, to provide parameter values that enable the generative AI access layer to trigger a function call.

In some examples, function calls are leveraged to bridge the gap between a generative AI model's natural language processing capabilities and structured actions to be performed to generate a suitable capability result. For example, when processing a user's natural language input, the generative AI model might determine that certain capabilities need to be executed and trigger a function call to provide information for those capabilities back to the generative AI access layer. In some examples, the method includes recursively executing function calls to finalize a capability result (e.g., where multiple dependent or nested function calls are performed to obtain data for performing a capability).

Output presented within a user interface of the software application may include an execution result. An "execution result," as used herein, may include or represent the outcome of executing a relevant capability. For example, in a transportation management software application, an execution result might involve updating the user interface to show newly planned freight units on a truck, displaying enriched information in a freight order list, or presenting calculated emissions for a set of freight orders. The execution result may be persisted in a database (e.g., after user confirmation), allowing for the integration of AI-driven actions into the workflow of the software application.

Examples in the present disclosure provide technical solutions to technical problems experienced with respect to software products. As mentioned, many software products have complex and technical interfaces that can be challenging for users to navigate in an efficient manner. A user may need to input detailed and precise technical commands to execute desired functionality. These limitations not only make it difficult to operate the software application, but also make it technically challenging to leverage the power of natural language processing. Examples described herein allow for efficient interpretation of intents and execution of relevant capabilities, thereby bridging the technical gap between unstructured inputs and controlled, structured outputs.

In some examples, a generative AI access layer provides a structured framework for integrating generative AI capabilities into existing software applications, thereby enabling flexible configuration and adaptation of AI behaviors to suit different application needs. By providing a standardized interface between the software application and one or more AI models, the generative AI access layer can address technical challenges associated with integrating AI functionality into existing applications.

Components described herein can provide a unified, adaptable framework to support various applications, use cases, or AI-driven capabilities while maintaining consistency in handling different types of AI models and evolving API specifications. In some examples, the generative AI access layer has a modular architecture that can be relatively easily extended to new applications without requiring significant changes.

Examples in the present disclosure relate to specific practical applications, such as the specific practical application of processing natural language inputs using generative AI to control software application operation (e.g., in a transportation management software application). At least some examples described herein thus provide a specific application of AI to a specific field of technology to provide technological solutions.

When the effects in this disclosure are considered in aggregate, one or more of the methodologies described herein may obviate a need for certain efforts or resources that otherwise would be involved in operating software applications. Computing resources utilized by systems, databases, or networks may be more efficiently utilized or reduced, such as a result of a reduction in the time it takes to execute certain capabilities of a software application or a reduction in the number of user inputs needed to execute such capabilities. For example, software application capabilities can be performed with enhanced speed, thus freeing up computing resources. Examples of such computing resources may include processor cycles, network traffic, memory usage, graphics processing unit (GPU) resources, data storage capacity, power consumption, and cooling capacity.

It is further noted that improvements in speed, efficiency, or resource management obtained using systems or methods in the present disclosure cannot be accomplished without computer technology due to the specific processes to be executed in the techniques described herein. These include, for example, real-time processing of potentially large amounts of structured and unstructured data, real-time generation of complex prompts, generation of various objects to handle generative AI scenarios, AI model inference, function calls, the real-time rendering of content for presentation in a user interface, and real-time communication between computing systems or devices.

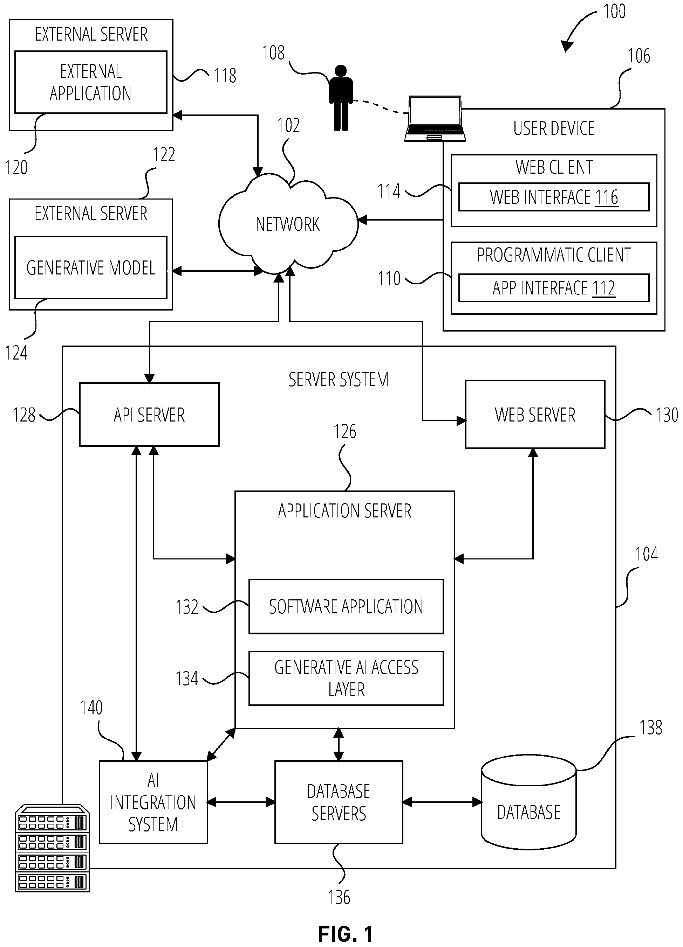

FIG. 1 is a diagrammatic representation of a networked computing environment 100 in which some examples of the present disclosure may be implemented or deployed. One or more servers in a server system 104 provide server-side functionality via a network 102 to a networked device, in the example form of a user device 106 that is accessed by a user 108. A web client 114 (e.g., a browser) or a programmatic client 110 (e.g., an "app") may be hosted and executed on the user device 106.

An Application Program Interface (API) server 128 and a web server 130 provide respective programmatic and web interfaces to components of the server system 104. An application server 126 hosts a software application 132 and a generative AI access layer 13 4 that is communicatively coupled with the software application 132. The software application 132 and the generative AI access layer 134 each include components, modules, or applications.

The user device 106 can communicate with the application server 126, such as via the web interface supported by the web server 130 or via the programmatic interface provided by the API server 128. It will be appreciated that, although only a single user device 106 is shown in FIG. 1, a plurality of user devices may be communicatively coupled to the server system 104 in some examples.

Further, while certain functions may be described herein as being performed at either the user device 106 (e.g., web client 114 or programmatic client 110) or the server system 104, the location of certain functionality either within the user device 106 or the server system 104 may be a design choice or driven by resource considerations of a particular use case. For example, certain functionality described as being performed by the software application 132 at the application server 126 may also be performed at the user device 106 by the web client 114.

The application server 126 is communicatively coupled to database servers 136, facilitating access to one or more information storage repositories, such as a database 138. In some examples, the database 138 includes storage devices that store information to be processed by the software application 132, the generative AI access layer 134, and other components or systems described herein.

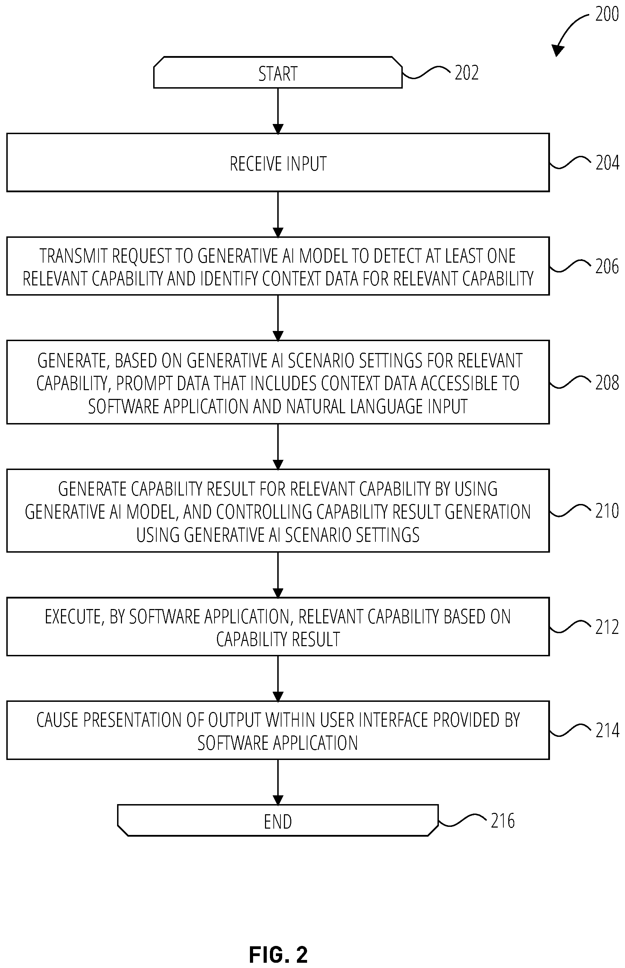

The application server 126 accesses application data (e.g., application data stored by the database servers 136) to provide one or more features or software tools to the user device 106 via a web interface 116 or an app interface 112. As described further below according to examples and with specific reference to FIG. 2 to FIG. 10, the application server 126, using the software application 132 and the generative AI access layer 134, may enable dynamic control and execution of certain capabilities of the software application 132.

The software application 132 can be one of various types of software applications. For example, the software application 132 is a transportation management software application that enables the user device 106 to manage transportation resources. This may include scheduling, assigning, updating, adapting, or augmenting one or more transportation data objects within a context of the software application 132. In such an example, the generative AI access layer 134 supports one or more of these capabilities to improve the speed, efficiency, or accuracy of the software application 132.

The generative AI access layer 134 allows the software application 132 to access and utilize generative AI functionality. For example, the generative AI access layer 134 allows the software application 132 to leverage, via an AI integration system 140, features of a generative model 124 that resides on an external server 122. In some examples, the generative AI access layer 134 supports various generative AI scenarios, thereby enabling the executing of various capabilities of the software application 132. In some examples, the software application 132 remains responsible for executing the relevant capabilities, with the generative AI access layer 134 bridging the gap between unstructured or natural language inputs received by the software application 132 and the structured data it needs to execute such capabilities.

The application server 126 may form part of a cloud-based platform that allows the user 108 to utilize tools or features of the software application 132. For example, an account holder may access the application server 126 (e.g., using suitable login credentials) and use the software application 132 during a user session.

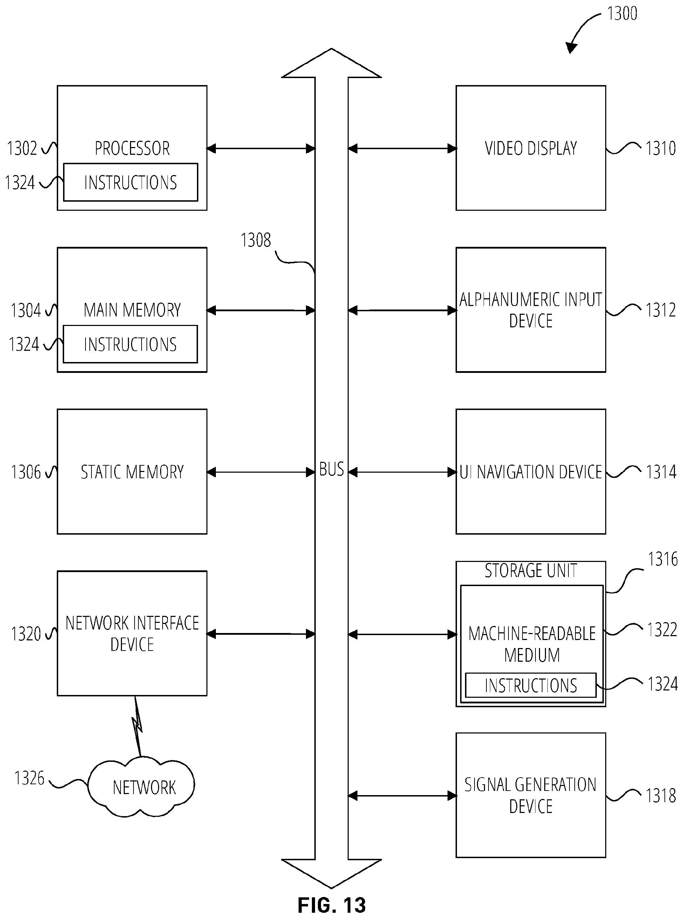

One or more of the application server 126, the generative AI access layer 134, the AI integration system 140, the database servers 136, the API server 128, the web server 130, and the software application 132 may each be implemented in a computer system, in whole or in part, as described below with respect to FIG. 13. In some examples, external applications (which may be third-party applications or applications provided by the same provider that provides the software application 132), such as an external application 120 executing on an external server 118, can communicate with the application server 126 via the programmatic interface provided by the API server 128. For example, a third-party application may support one or more features or functions on a website or platform hosted by a third party, or may perform certain methodologies and provide input or output information to the application server 126 for further processing or publication.

As mentioned, the server system 104 may communicate with the external server 122 to access features of a generative model 124. In other examples, the generative model 124 is hosted locally at the server system 104 (e.g., as part of the AI integration system 140), and the architecture shown in FIG. 1 is merely an example.

In some examples, the generative model 124 is or includes a machine learning model known as a "language model." A language model that contains a significant number of parameters (e.g., in excess of a billion) may be known as a "Large Language Model," or "LLM." A language model such as an LLM may include a computational model developed for the tasks of processing, generating, and understanding human language. It employs machine learning methodologies, including deep learning architectures. The training of an LLM may utilize comprehensive training data, such as vast data sets of textual content, to enable the LLM to recognize patterns in language or other text. The LLM may be built upon a neural network framework, such as the transformer architecture (e.g., a transformer-based LLM).

A processing engine (e.g., at the AI integration system 140 or at the external server 122) may handle certain preprocessing of data before sending it to the generative model 124, and certain postprocessing of the responses received from the generative model 124. For preprocessing, the processing engine may tokenize, compress, or format the data to optimize it for the generative model 124. For postprocessing, it may format the response, perform detokenization or decompression, and prepare the response for sending back to a requesting system, as described in greater detail elsewhere in the present disclosure.

In some examples, a generative AI model, such as an LLM, is fine-tuned on tasks relating to a specific use case to improve its ability to provide useful or accurate results. For example, an LLM may be fine-tuned to identify, based on inputs received by the software application 132, relevant capabilities of the software application 132 (e.g., one or more specific capabilities that a user wishes to use, deduced from their natural language input), and also to obtain or generate the information needed by the software application 132 to execute those relevant capabilities.

The network 102 may be any network that enables communication between or among machines, databases, and devices. Accordingly, the network 102 may be a wired network, a wireless network (e.g., a mobile or cellular network), or any suitable combination thereof. The network 102 may include one or more portions that constitute a private network, a public network (e.g., the Internet), or any suitable combination thereof.

FIG. 2 is a flowchart illustrating operations of a method 200 for using a generative AI access layer to facilitate the controlling of a software application, according to some examples. By way of example and not limitation, aspects of the method 200 may be performed by the components, devices, systems, or database shown in FIG. 1. Accordingly, reference is made to the software application 132 and the generative AI access layer 134 of FIG. 1 to describe operations of the method 200.

The method 200 commences at opening loop operation 202. For example, the user 108 uses the user device 106 to access the software application 132 via the web interface 116 of the web client 114, and a user session starts. The user 108 interacts with the software application 132 to use one or more of its features or capabilities.

At operation 204, the generative AI access layer 134 receives input. In some examples, the input is natural language user input provided by the user 108. In other examples, the input is automated system input generated by the software application 132.

An example of natural language user input is the user 108 inputting "show me all our warehouses on the map" via the web interface 116. The natural language user input is received by the software application 132 and passed on to the generative AI access layer 134 for further processing. An example of an automated system input is a system message to "transform this comment into a structured table." For instance, the user 108 adds a comment to a data table, and the software application 132 automatically triggers the system message for the generative AI access layer 134 to process without an explicit instruction from the user 108.

A plurality of capabilities of the software application 132 are supported by the generative AI access layer 134. At operation 206, the generative AI access layer 134 transmits a request to the generative model 124 to detect at least one relevant capability.

For example, the generative AI access layer 134 causes transmission of prompt data to the generative model 124 within a first request. The prompt data includes the input provided at operation 204, details of the supported capabilities of the software application 132, and an instruction to classify one or more of the supported capabilities as relevant to the input. The generative model 124 then detects which one or more of the supported capabilities are relevant to the input. The first request sent to the generative model 124 may thus involve a "classification call."

The generative AI access layer 134 receives a response from the generative model 124 that identifies the relevant capability. In some examples, the response received from the generative model 124 also identifies context data needed to perform the relevant capability. For example, the generative model 124 determines that location data is needed to perform a relevant capability that relates to the input "show me all our warehouses on the map." The generative AI access layer 134 then uses generative AI scenario settings for the specific relevant capability to proceed with the method 200, based on the response received from the generative model 124.

In the example of FIG. 2, only one capability is classified as relevant to the input. However, in other examples, the input includes different parts that correspond to respective capabilities. In such cases, the generative model 124 may deconstruct the input into the different parts to identify the respective capabilities to be executed by the software application 132. Further, in such cases, the generative AI access layer 134 can generate and use different generative AI scenario settings for each respective capability to obtain respective capability results.

Referring again to FIG. 2, at operation 208, the generative AI access layer 134 generates further prompt data specific to the relevant capability detected using the generative model 124. For example, the further prompt data includes the input received at operation 204 (or a specific part of the input that is associated with the capability), details of a task to be performed by the generative model 124, as well as context data that will be needed by the generative model 124 to handle a task related to the relevant capability. For instance, if the relevant capability of the software application 132 involves showing locations on a map, the further prompt data instructs the generative model 124 to identify the locations of all warehouses from within the context data and to return the result in a structured format. As mentioned, in some examples, the generative AI access layer 134 can generate or retrieve the relevant context data based on the initial identification of required context data in the first response from the generative model 124.

In some examples, the generative AI scenario settings include one or more prompt structures that enable the generative AI access layer 134 to generate the necessary prompts. In some examples, a prompt includes interaction history data that includes one or more previous inputs received from the software application 132. In this way, the generative model 124 is provided with further context data.

At operation 210, the generative AI access layer 134, with the assistance of the generative model 124, generates a capability result for the relevant capability. In some examples, the generative AI access layer 134 causes the further prompt data that is specific to the relevant capability to be transmitted to the generative model 124 and receives a response. Using the aforementioned example, the generative AI access layer 134 receives a structured response that includes the locations of all the warehouses. The generative AI access layer 134 then adjusts the response into a format or structure expected by the software application 132, as defined by the generative AI scenario settings. The capability result is then returned to the software application 132 in the format or structure it expects.

In some examples, the method 200 includes one or more intermediate operations that are involved in producing a final capability result. For example, the generative AI access layer 134 executes one or more function calls in order to arrive at the final capability result. In some cases, the generative model 124 returns intermediate results that enable the generative AI access layer 134 to execute a function call to obtain final capability results. As a specific non-limiting example, the generative model 124 is requested to return the locations of all the warehouses. However, the generative model 124 first responds by indicating that it needs warehouse identifiers in order to generate location data. The generative AI scenario settings may specify function call settings that allow the generative AI access layer 134 to automatically perform function calling (e.g., to retrieve further data from the database 138). The generative AI access layer 134 then performs a function call to obtain the warehouse identifiers, and transmits a further request to the generative model 124, including the warehouse identifiers, to allow the generative model 124 to generate the location data.

At operation 212, the software application 132 executes the relevant capability. Using the aforementioned example again, the software application 132 receives a table with the location data for the warehouses, and updates a map shown in the web interface 116 to highlight or otherwise display the relevant locations.

At operation 214, the software application 132 causes presentation of output in the web interface 116. For example, the software application 132 displays the updated map. The software application 132 may further display a natural language response within the web interface 116 (e.g., "The map has been updated to show the locations you requested."). The natural language response may be generated using the generative model 124 or may be preconfigured in the software application 132 for the relevant capability. The method 200 concludes at closing loop operation 216.

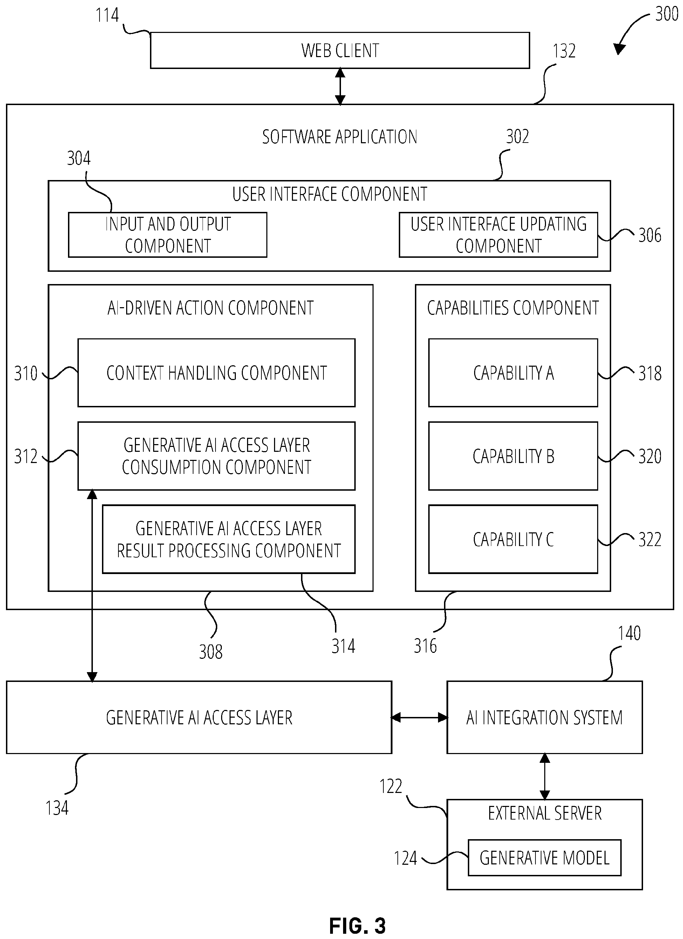

FIG. 3 is a diagram 300 that shows the software application 132 of FIG. 1, according to some examples. The diagram 300 also shows the web client 114, the generative AI access layer 134, the AI integration system 140, and the external server 122 of FIG. 1, all of which operatively interact (directly or indirectly) with the software application 132. The software application 132 is shown to include a user interface component 302, an AI-driven action component 308, and a capabilities component 316.

The user interface component 302 includes an input and output component 304 as well as a user interface updating component 306. In some examples, the input and output component 304 enables the user 108 to provide inputs using natural language. In some examples, the user 108 can enter a prompt in natural language, without being subject to any syntax restrictions. A suitable button in the user interface can enable the user 108 to submit the input. The input and output component 304 may provide outputs (e.g., results or changes) to the user 108 at the user device 106.

The user interface updating component 306 can update the user interface of the software application 132, such as the web interface 116, based on execution results. For example, in the case of the transportation management software application, the user interface updating component 306 might enrich columns in freight unit, freight order, or truck lists to show or add information about certain transportation-related data objects. In some examples, this allows for automatic changes or updates to data, with such changes being persisted in the database 138 upon user approval.

The AI-driven action component 308 may include a context handling component 310, a generative AI access layer consumption component 312, and a generative AI access layer result processing component 314. The AI-driven action component 308 prepares or updates context for the generative model 124 using the context handling component 310. For example, the software application 132 initializes a context handling object during runtime for this purpose. The generative AI access layer consumption component 312 may be configured to read context data related to a current user session in the software application 132.

Context data may include various different types of data that are passed (or available for passing) to the generative model 124 as additional input. For example, the context data includes details about the current state of the software application 132, relevant business objects, or user-specific information that helps ground the responses of the generative model 124. In a transportation management software application, for instance, context data might include information about freight units, trucks, routes, or current constraints within a planning session of the user 108.

In some examples, during runtime, a context handling object provides a table that includes the context data. For example, a table can include columns for an object identifier, an object name, and object information, respectively. In some examples, the context handling component 310 retrieves context data for a specific capability from a larger a context dataset (e.g., from within the table) to enable the generative AI access layer 134 to handle the specific capability.

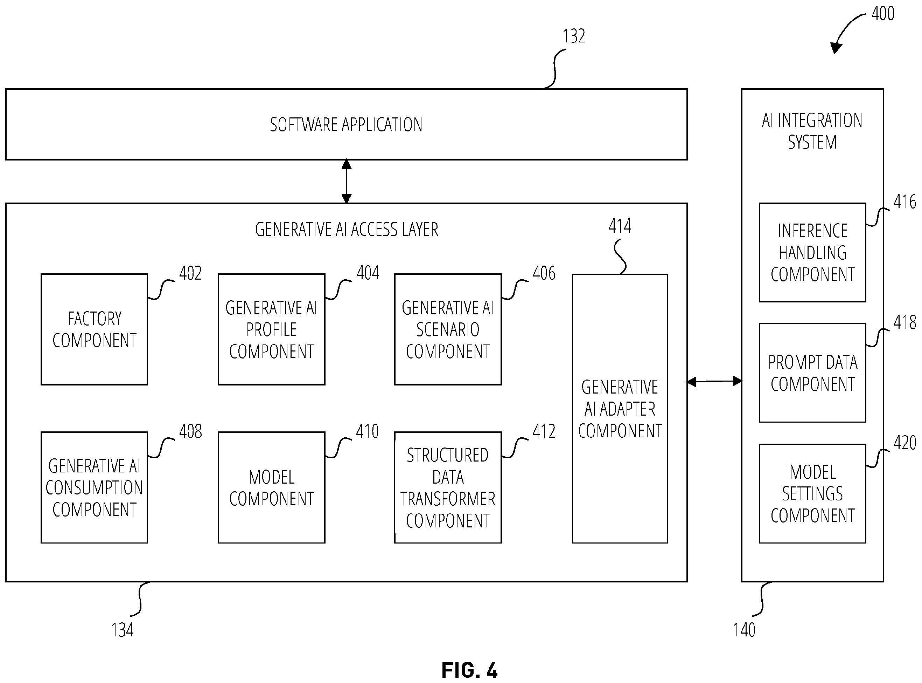

The generative AI access layer consumption component 312 can be provided by initializing a generative AI access layer consumption object during runtime. The generative AI access layer consumption component 312 works with the generative AI access layer 134 to consume the generative model 124 based on the relevant generative AI scenario settings (e.g., based on a configuration stored in the corresponding generative AI profile) used to create the generative AI scenario during runtime. The generative AI access layer 134, according to some examples, is described in greater detail with reference to FIG. 4.

In some examples, the AI-driven action component 308 uses the generative AI profile to identify a main use case, or main task, e.g., based on a profile type stored in the database 138. The main task can be associated with a plurality of specific capabilities of the software application 132. For example, in the context of a transportation management software application, the main task might be a "Main Planning Task," while the specific capabilities falling under the main task include capabilities such as "Enrich Freight Order List," "Enrich Freight Unit Stage List," "Enrich Truck List," "Plan Truck on Freight Order," "Plan Freight Unit Stage on Freight Order," "Plan Freight Unit on Truck," and "Calculate Freight Orders' Emissions for Truck." Merely as an example, however, the capabilities component 316 of FIG. 3 illustrates three capabilities: capability A 318, capability B 320, and capability C 322.

The main task and the individual capabilities can be handled based on respective scenario objects, as is described in greater detail with reference to FIG. 4. In some examples, the main task is handled first by way of a classification call to the generative model 124. This enables the generative AI access layer 134 to identify which of the specific capabilities to focus on in subsequent processing.

The generative AI access layer result processing component 314 handles the processing of capability results. For example, after results generated by the generative AI access layer 134 (and using the generative model 124) have been converted into a table of actions, this table can be processed in a loop by the generative AI access layer result processing component 314 to cause automatic execution of the relevant capabilities as provided by the capabilities component 316. For example, the generative AI access layer 134 ultimately provides capability results that indicate actions and information for executing two respective capabilities: capability A 318 and capability B 320. The generative AI access layer result processing component 314 processes parameter values for those capabilities, as provided by the generative AI access layer 134, and causes the software application 132 to execute them accordingly.

FIG. 4 is a diagram 400 that illustrates the generative AI access layer 134 and the AI integration system 140, according to some examples. The diagram 400 also shows the software application 132, which operatively interacts (directly or indirectly) with the generative AI access layer 134 and the AI integration system 140.

The generative AI access layer 134 is shown to include a factory component 402, a generative AI profile component 404, a generative AI scenario component 406, a generative AI consumption component 408, a model component 410, a structured data transformer component 412, and a generative AI adapter component 414. The AI integration system 140 is shown to include an inference handling component 416, a prompt data component 418, and a model settings component 420.

The factory component 402 is used by the consuming application (e.g., the software application 132) to instantiate other components. For example, the factory component 402 provides methods that return an instance of a consumption object corresponding to the generative AI consumption component 408, an instance of a scenario object associated with the generative AI scenario component 406, or an instance of an adapter object corresponding to the generative AI adapter component 414.

The generative AI profile component 404 can be provided by a data access object used by the consuming application to retrieve profile data, such as a generative AI profile stored in the database 138. For example, this allows the software application 132 to read the generative AI profile using a profile identifier to obtain a table of its assigned capabilities. In some examples, the generative AI profile further provides access to prompt structure data and model settings (e.g., for specific scenarios corresponding to respective capabilities of the software application 132).

The generative AI profile may be linked with the AI integration system 140 to provide prompt structure data from a prompt data component 418 thereof, and model settings from a model settings component 420 thereof. The AI integration system 140 is discussed further below.

Returning to the generative AI access layer 134, the generative AI scenario component 406 utilizes one or more scenario objects to control generation of capability results during runtime. In some examples, the generative AI scenario component 406 handles the logic to classify a main task defined by the generative AI profile by identifying the relevant capabilities using the generative model 124, and to further consume the generative model 124 to process each relevant capability associated with the main task (e.g., to determine a list of relevant actions for the software application 132 to perform). In some examples, each relevant capability is processed separately (e.g., in parallel).

In some examples, a scenario object defines generative AI scenario settings for use in a consumption object to allow the consumption object to control generation of a capability result. The scenario object can define behavior for performing function calls and various other actions. Examples of generative AI scenario settings are listed below (it is noted that some may be mandatory, while some are optional):
- Scenario identifier: identifies the generative AI scenario;
- Model: identifies the generative model 124;
- Model parameters: identifiers settings to be applied to the generative model 124;
- Function call settings: function-related information such as a list of function call definitions;
- Adapter settings associated with the generative AI adapter component 414;
- Generative AI access framework (e.g., details associated with the AI integration system 140);
- System prompt: a system or task prompt;
- System prompt parameters: information such as a table of strings to represent parameters for the system prompt;
- Example messages: used to ground the generative model 124; and/or
- Memory settings: settings that define if, and how many, previous interactions are to be kept in the memory of the generative AI consumption component 408.

A scenario object may expose its functionality via an interface to enable other components to obtain the generative AI scenario settings. For example, this enables the generative AI access layer 134, when using a consumption object, to provide access to model, adapter and memory settings, to determine prompt structures for generating prompts related to a particular capability, and to determine logic for handling function calls associated with the particular capability.

A scenario object may have a scenario identifier, a task prompt, and example prompt template identifiers. The scenario identifier may indicate which parameters to use for the model.

In some examples, a scenario contains references to two prompt templets: "task" and "examples." The "task" (also known as "system prompt") prompt template contains the definition of the generative AI task. It indicates to the generative AI model what the purpose of the call and the expected result is. It also indicates the input that will be provided and possible constraints that need to be considered. The "examples" provide example messages to ground the generative model 124.

As mentioned above, a main task and individual capabilities can be handled based on respective scenario objects. The generative AI access layer 134 can thus use different scenario objects for these different purposes. In some examples, the main task relies on a classification scenario to first analyze the input, and to determine the relevant capabilities and objects that need to be executed. In some examples, the generative model 124 decides whether a relevant capability should be executed and indicates the information needed to execute the relevant capability (e.g., how to arrive at a specific capability result).

An example of a prompt for the main task is provided below, using the context of a transportation management software application for illustrative purposes:
Task: Your task is to classify and distribute the user prompts into corresponding types of actions.
If the action may require further information, you can include it as required information for that type of action. Take care to indicate the required info as part of an array. Always trigger function call to respond. If the prompt language is not English, also always trigger the function call.
Never respond directly to the prompt, you are only allowed to trigger the function call.
If the action requires objects, provide the required objects in the function call parameter. The objects may require information as follows:
- Freight Order: source city, source location, location sequence, registration number, status, weight, weight capacity, description, destination city, destination location, products
- Freight Unit Stage: products, source city, source location, status, weight, description, destination city, destination location
- Truck: registration number, depot location, temperature control, weight capacity, description
Always use the available function call to provide the information to the backend system. Never answer directly as an assistant. Take care to not change the prompts unless it is necessary to provide more info.
The possible types of actions are:
- 'ENRICH_FU_STAGE_LIST': Enrich Freight Unit Stage Objects with additional information. Requires the freight unit stage object.
- 'ENRICH_FO_LIST': Enrich Freight Order Objects with additional information. Requires the freight order object.
- 'ENRICH_TRUCK_LIST': Enrich Truck Objects with additional information. Requires the truck object.
- 'PLAN_TRUCK_ON_FO': Assign a truck with the unplanned status to a freight order. Requires the truck and freight order objects.
- 'PLAN _FU_STAGE_ON_FO': Assign a freight unit stage to a freight order. Requires the freight unit stage and freight order objects.
- 'PLAN_FU_STAGE_ON_TRUCK': Assign a freight unit stage to a truck. Requires the freight unit stage and resource objects.
- 'CALCULATE_FO_EMISSIONS': Calculate emissions for freight orders for a given truck. Requires the truck and freight order objects.
So, for example, assigning a truck to a freight order would correspond to the action type 'PLAN_TRUCK_ON_FO'. Assigning a freight unit stage to a freight order would correspond to the action type 'PLAN_FU_STAGE_ON_FO'. Assigning a freight unit stage to a truck, or a truck to a freight unit stage, would correspond to the action type 'PLAN_FU_STAGE_ON_TRUCK'. Asking for adding information to the freight unit stages would correspond to the action type 'ENRICH_FU_STAGE_LIST'. Asking to calculate the emissions for some freight orders and a truck would correspond to the action type 'CALCULATE_FO_EMISSIONS'. Consider only the latest prompt by the user. If the prompt refers to something mentioned or answered in a previous prompt, then it is necessary to adapt the prompt so that it contains all information by itself. If an action seems to refer to more than one entity, consider required info for all the entities.

An example of a prompt for a specific capability, "Enrich Freight Unit Stage List," is provided below, still using the context of the transportation management software application for illustrative purposes:
Task: Generate a "enrich FU stage list action" in JSON format, based on a natural language request string and table of objects. The action shall enrich the provided objects with additional information.
Object Table: A table of freight unit stage objects.
Columns: Object ID: Unique identifier for the object. Object Name: Name of the object 'Freight Unit Stage'. Object Information: Detailed information about the object. The format varies based on the object type, but it follows a consistent structure explained below.
Object Information Structure: Different details about the object are separated using a semicolon ;. Each detail follows a key=value format.
Examples for Object Information Structure: For a 'Freight Unit Stage', you might have: source city=Mannheim,products=Apples:50,Oranges:30,Bananas:100. products lists the items and their quantities in the order. Other types of information that can be passed for a given object include (but is not limited to): For Freight Units: status, source city, source location, destination city, destination location, products, weight
The action ID is ENRICH_FU_STAGE_LIST.
Output: Format your response as a JSON object, as an array called ACTIONS. Only return the list of actions in JSON format with the three columns action ID, target object, and info. The info column shall contain the requested information for each freight unit. This info shall not be longer than 35 characters. You can abbreviate the information if necessary to safeguard that limit. Also return an additional EXPLANATION parameter in the JSON string. This explanation should contain a very short summary of the result. If no result could be determined, this explanation should include information on the reason for the missing actions. The explanation should never contain information that does not correspond to the actual result. Never add any additional comments or explanations outside this explanation parameter. The explanation must be returned in the language of the input prompt.

In some examples, a result of the main task is a structured object (e.g., a JavaScript Object Notation (JSON) object) with certain properties. For example, a JSON array of capabilities is generated by the generative model 124 with the following structure:
- Capability type/identifier
- Prompt associated with capability type
- Required information
- Required data objects

Accordingly, where initial input (e.g., from the user 108) includes multiple instructions, the result may include a list of the corresponding relevant capabilities with the values for the necessary properties. Once the main task has been handled, the generative AI access layer 134 can generate respective scenario objects for the relevant capabilities. In some examples, each relevant capability is handled using a specific task that considers only the information (e.g., context data and input) relevant to the particular capability. In some examples, a result that is generated for a capability (e.g., a capability result) can include a structured object with certain properties. For example, a JSON array of actions is generated by the generative model 124 (or by the generative AI access layer 134 with the assistance of the generative model 124) with the following structure:
- Action identifier
- Source object
- Target object
- Information/Explanation

The generative AI consumption component 408 is responsible for orchestrating other components through the use of a consumption object, and handles messages that are used in the calls to the generative model 124. In some examples, the consumption object provided by the generative AI consumption component 408 contains instances of the other main objects used by the generative AI access layer 134 and has an internal representation of the interactions between the software application 132 and the generative model 124. In some examples, the consumption object contains or accesses the generative AI scenario settings associated with a particular scenario object to control generation of a capability result.

The generative AI consumption component 408 thus enables the software application 132 to consume features of the generative model 124. In some examples, an interface of the generative AI consumption component 408 offers several methods, such as methods for adding input to a call, executing a call, obtaining a result of the call, or obtaining all messages. The generative AI consumption component 408 may allow the software application 132 to add input and context data to a call. The generative AI consumption component 408 can also add other prompt data, such as a system prompt or other prompt template data as discussed elsewhere. In some examples, the AI-driven action component 308 calls the generative AI adapter component 414 using an associated adapter object and also handles the response from the generative model 124 by using the relevant model implementation to extract the contents.

In some examples, the generative AI consumption component 408 is responsible for message handling. For example, if the generative model 124 is stateless, the generative AI consumption component 408 ensures that all relevant information is passed in each call. This may include passing the history of messages in each call. In some examples, the generative AI consumption component 408 provides an internal storage of message history for a particular user session.

The message history can be provided to the software application 132 via a corresponding interface method. The generative AI consumption component 408 may offer a method to obtain the last message from the "assistant" (e.g., the generative model 124) and return it as a string or a structured result. In the latter case, the method can receive a reference to the expected data type and attempt an appropriate transformation of the response from the generative model 124. A message handling object can be instantiated to handle messages.

The model component 410 may provide a representation of the generative AI model used by the system (e.g., the generative model 124). In some examples, the model component 410 provides an interface for serializing API requests and extracting API responses (e.g., into a table of messages, token usage information, and/or function call information).

In some examples, requests are serialized as follows:
1. A JSON transform object is initialized for the request.
2. If required, a specific model or deployment identifier is to be added with the corresponding property to the request.
3. Messages are serialized by creating an array object and looping at the input messages. Each message may contain the required parameters (e.g., role, name, and message).
4. Then, the model parameters, such as maximum number of tokens and temperature, are serialized.
5. If the model supports function calling, the function call settings are serialized. This may include defining available functions and corresponding arguments with a JSON schema.
6. The request object is finalized and the corresponding string is returned.

In some examples, responses are deserialized as follows:
1. The response string is deserialized into a model-specific structure.
2. Depending on the type of deserialized response, either function call info or response messages can be added.
3. If the model returns token usage information, this can also be added and returned.

The structured data transformer component 412 can be used by other components and offers functionality to handle strings and data types that need to be serialized or deserialized. In some examples, the structured data transformer component 412 provides methods for converting data structures into JSON format and vice versa, facilitating efficient data exchange with the generative model 124.

As mentioned, the generative AI adapter component 414 works with the generative AI consumption component 408. For example, an adapter object works with the consumption object and oversees integration of one or more frameworks used to access the generative model 124. The generative AI adapter component 414 may offer a method for the call to the generative model 124, which receives serialized API requests and returns API responses as strings.

Referring again to the AI integration system 140, the AI integration system 140 facilitates the interaction between the generative AI access layer 134 and the relevant model (e.g., the generative model 124). An inference handling component 416 of the AI integration system 140 may handle inference through, for instance, an HTTP client that is communicatively coupled to the external server 122 that hosts the generative model 124.

As mentioned above, the AI integration system 140 can also integrate with the generative AI access layer 134 by providing prompt data and model settings associated with specific generative AI profiles or capabilities. For example, the prompt data component 418 stores or manages prompt structures and provides these to the generative AI access layer 134 for particular scenarios, and the model settings component 420 stores or manages model settings and provides these to the generative AI access layer 134 for particular scenarios (e.g., specific prompt data and/or model settings are associated with respective scenario identifiers). In some examples, upon initially reading the generative AI profile, the generative AI profile component 404 obtains prompt identifiers and model settings associated with the relevant profile from the AI integration system 140.

In some examples, at least some of the components shown in FIG. 3 or FIG. 4 are configured to communicate with each other to implement aspects described herein. One or more of the components described herein may be implemented using hardware (e.g., one or more processors of one or more machines) or a combination of hardware and software. For example, a component described herein may be implemented by a processor configured to perform the operations described herein for that component. Moreover, two or more of these components may be combined into a single component, or the functions described herein for a single component may be subdivided among multiple components. Furthermore, according to various examples, components described herein may be implemented using a single machine, database, or device, or be distributed across multiple machines, databases, or devices.

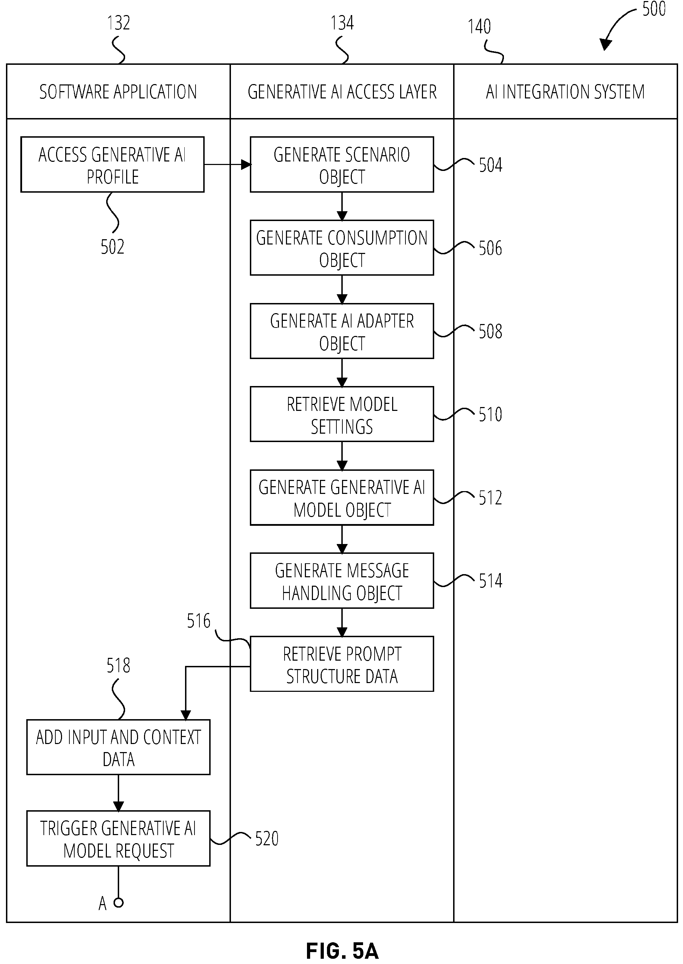

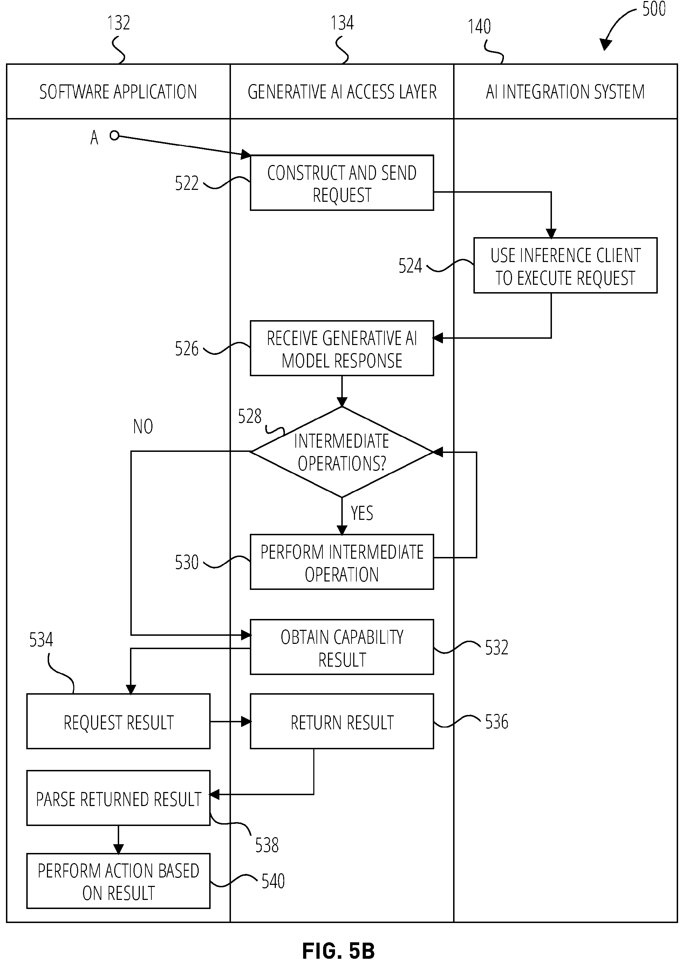

FIG. 5A and FIG. 5B illustrate operations of a method 500 to control operation of a software application, according to some examples. By way of example and not limitation, aspects of the method 500 may be performed by the components, devices, systems, or database shown in FIG. 1, FIG. 3, and FIG. 4. Accordingly, reference is made to the software application 132, the generative AI access layer 134, and the AI integration system 140 to describe example operations of the method 600.

The method 500 illustrates ways in which a connected software application, such as the software application 132, can access and use the generative AI access layer 134. The use of the generative AI access layer 134 can involve classification calls, capability calls, or a combination thereof, and the processing of various data objects via the generative AI access layer 134.

At operation 502, the software application 132 accesses a generative AI profile. For example, the software application 132 uses the factory component 402 of the generative AI access layer 134 to instantiate a profile access object, with the profile access object being used to read the generative AI profile. In some examples, the generative AI profile provides information to the generative AI profile component 404 that enables the AI-driven action component 308 of the software application 132 to determine the supported capabilities of the software application 132.

In some examples, as part of the operation 502, the software application 132 extracts at least one scenario identifier and prompt template identifiers from the generative AI profile. The scenario identifier may, for example, identify a generative AI scenario for a particular capability.

At operation 504, the generative AI access layer 134 is operated to generate a scenario object. For example, the factory component 402 is used to instantiate a generative AI scenario by using the information retrieved from the generative AI profile as generative AI scenario settings.

It is noted that operations of the method 500 may be performed using a scenario object for a main task (e.g., use the generative AI access layer 134 to handle a classification call) or using a scenario object for a specific capability (e.g., using the generative AI access layer 134 to execute or facility a specific capability).

The method 500 proceeds to operation 506, where the generative AI access layer 134 instantiates a consumption object (e.g., using the factory component 402) and passes, as input, the scenario object. Thus, in some examples, the consumption object stores the scenario object and can use its generative AI scenario setting to control subsequent generation of results or AI model outputs. FIG. 4 describes examples of features of the scenario object and the consumption object with respect to the generative AI scenario component 406 and the generative AI consumption component 408, respectively.

At operation 508, the generative AI access layer 134 instantiates an adapter object (e.g., using the factory component 402). The features of the adapter object may correspond to those described for the generative AI adapter component 414 of FIG. 4.

At operation 510, the generative AI access layer 134 retrieves model settings corresponding to the generative AI profile (e.g., contained within the generative AI scenario settings). This allows the generative AI access layer 134 to instantiate a model object at operation 512 with features corresponding, for example, to those described for the model component 410 of FIG. 4. At operation 514, the generative AI access layer 134 generates a message handling object, allowing messages to be initialized.

For example, and as shown at operation 516, the generative AI access layer 134 retrieves relevant prompt data (e.g., via the scenario object). Control returns to the software application 132, which adds input (e.g., the relevant natural language user input) and context data (where relevant or present) at operation 518. In some examples, the added data items are serialized and added as messages to the message handling object.

The software application 132 triggers a generative AI model request (e.g., call to the generative model 124) at operation 520. The consumption object receives the available messages and uses them and the model object to construct a model-specific API request for the generative model 124, with the request being sent by the generative AI access layer 134 at operation 522. The AI integration system 140 receives the request and instantiates an inference client (e.g., using the inference handling component 416 of FIG. 4) to handle the request at operation 524. For example, the AI integration system 140 adds a request body to the request, sends the request to the generative model 124, and receives the response from the generative model 124.

The response is returned to the generative AI access layer 134 and received by the consumption object at operation 526. The response may be extracted by deserializing the relevant API response component.

The response that is received at operation 526 can be handled in various ways. In some cases, the response is a "final" response which causes an end result, such as a message to a user to execution of a final action. In other cases, the response triggers one or more intermediate operations, as is also described elsewhere in the present disclosure.

At decision operation 528, the generative AI access layer 134 checks the response and determines whether any intermediate operation is needed. If so, the method 500 proceeds to operation 530 where an intermediate operation is performed by (or triggered by) the generative AI access layer 134. For instance, in some examples, the response from the generative model 124 is in the form of a function call, as described elsewhere in the present disclosure. In such cases, the generative AI access layer 134 handles the function call, for example, by passing the function name and arguments to a function call handler of the scenario object.

In some examples, this can result in further generative AI model calls and/or function calls, e.g., as needed to finalize capability results or to provide other useful output. Accordingly, the method 500 proceeds back to decision operation 528 to check whether any further intermediate operations are needed.

In some examples, once there are no further intermediate operations to be performed, the capability result is obtained at operation 532. The capability result can be the end result of various processing operations assisted by the generative model 124 (e.g., the result of recursive function calling). In some examples, a response from the generative model 124 is in the form of a string or in a structured format that indicates a finalized capability result (e.g., as opposed to a function call). The capability result can then be added to the message handling object for retrieval by the software application 132.

In some examples, a response from the generative model 124 is in the form of a string or in a structured format that indicates, instead of a function call or finalized capability result, a message to be presented to the user 108. For example, the generative model 124 may generate a natural language message to be presented within the web interface 116, asking the user 108 to provide further input for processing.

At operation 534, the software application 132 requests a result. For example, the operation 630 may request the last, or most recent, message from the message handling object, causing the generative AI access layer 134 to return result to the software application 132. The result may be returned at operation 536 by the generative AI access layer 134, either as a string or in a structured format, depending on the type of result, as discussed above.

At operation 538, the software application 132 parses the returned result to identify an action to perform. The software application 132 then performs the action at operation 540.

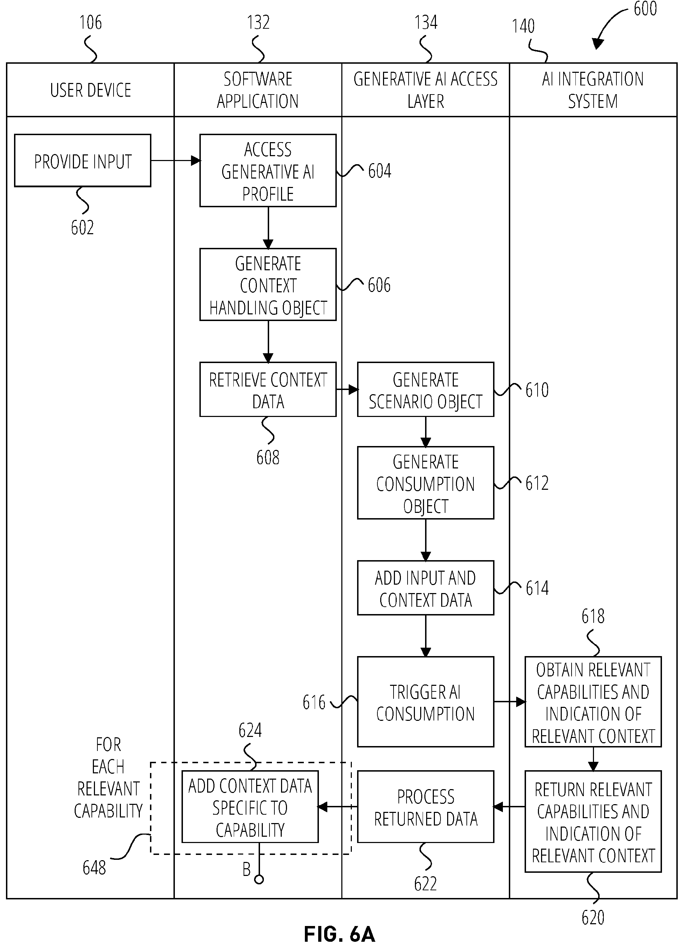

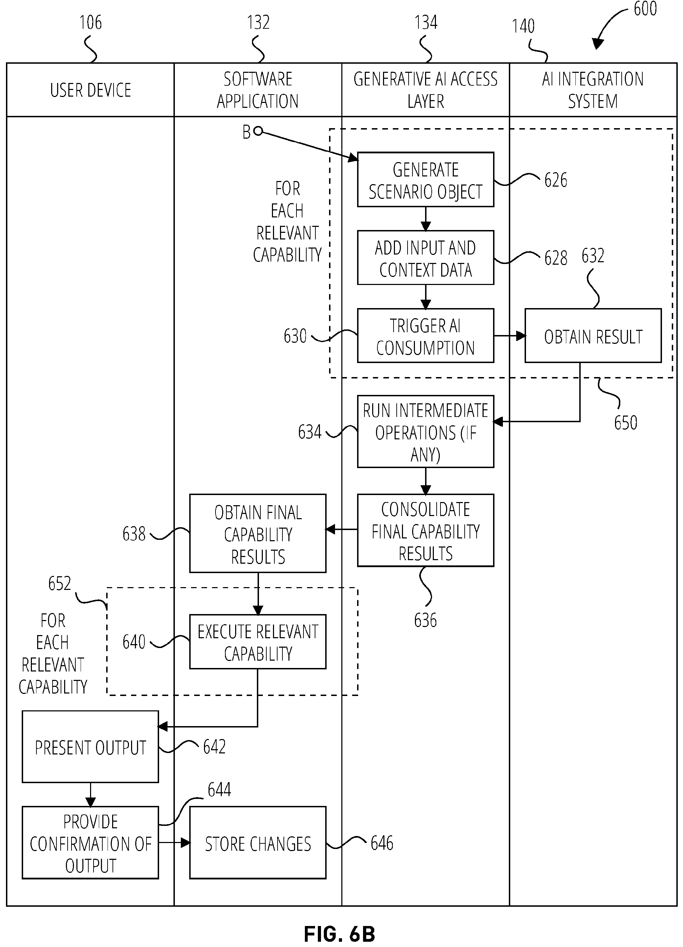

FIG. 6A and FIG. 6B illustrate operations of a method 600 to control operation of a software application, according to some examples. By way of example and not limitation, aspects of the method 600 may be performed by the components, devices, systems, or database shown in FIG. 1, FIG. 3, and FIG. 4. Accordingly, reference is made to the user device 106, the software application 132, the generative AI access layer 134, and the AI integration system 140 to describe example operations of the method 600.

Compared to the method 500 of FIG. 5, the method 600 illustrates a relatively more specific sequence of example operations in which the generative AI access layer 134 is first used for classifying one or more relevant capabilities, and then for resolving or facilitating execution of each relevant capability. The sequence can, for example, be performed in the context of a software application such as the transportation management software application that is communicatively coupled to the generative AI access layer 134 to act on natural language input to produce a user-perceptible end result.

At operation 602, the user device 106 provides input to the software application 132. In some examples, the input is natural language user input provided by the user 108 of the user device 106. The input triggers the AI-driven action component 308 to access a generative AI profile associated with the software application 132 at operation 604. The generative AI profile provides information that enables the AI-driven action component 308 to determine the supported capabilities of the software application 132. For example, the AI-driven action component 308 obtains a list of supported capabilities, one or more of which may be relevant to the input from the user 108.

At operation 606, a context handling object is instantiated by the AI-driven action component 308 (e.g., using the context handling component 310). The context handling object is used to retrieve context data at operation 608. For example, the context handling object reads object data for data objects that are currently relevant to the user session of the user 108. Such data objects may be maintained in a user session memory to enable the user 108 to use the software application 132.

The method 600 proceeds to operation 610, where the generative AI access layer 134 is used to instantiate a scenario object. In the method 600, the scenario object of operation 610 handles a main task associated with the generative AI profile, and defines both the main task and the supported capabilities associated with the generative AI scenario.

The scenario object of operation 610 is used as input by the generative AI access layer 134 to create a consumption object at operation 612. At operation 614, the generative AI access layer 134 adds input data to the consumption object. For example, the input provided at operation 602 and the context data obtained at operation 608 are added as input data.

The generative AI access layer 134 triggers AI consumption at operation 616, causing communication with the AI integration system 140 to transmit a classification call to the generative model 124, and to obtain a response to the classification call. The classification call uses the input data from operation 614, together with prompt structure data corresponding to the relevant scenario, to request that the generative model 124 detect the relevant capabilities and identify the context data that will be needed to handle each relevant capability.

The AI integration system 140 obtains (at operation 618) a list of the relevant capabilities and an indication of relevant context data. In other words, for example, the generative model 124 detects a set of relevant capabilities (e.g., the capability A 318 and the capability B 320 selected from a larger set) from among the supported capabilities of the software application 132 and returns the set, together with an indication of the context data needed to handle each capability in the set, to the AI integration system 140. The classification call thus has the purpose of classifying the initial input into relevant capabilities that need to be processed further. In some examples, the generative model 124 may also determine and return output indicating which parts of the input of operation 602 relate to which respective capabilities.

In some examples, the generative model 124 returns a list of the relevant capabilities and the indication via the AI integration system 140 at operation 620, together with the required object types and context information for each respective capability. The behavior to deal with the list of relevant capabilities is contained in the scenario object that was generated at operation 610. In some examples, the generative model 124 is specifically prompted to respond to the classification call with a function call, allowing the generative AI access layer 134 to obtain the relevant capabilities and other data in an expected format.

At operation 622, the generative AI access layer 134 processes the relevant data related to the identified capabilities using the generative AI scenario settings defined by the scenario object to determine how to handle the scenarios. In some examples, and as shown at operation 624 and by way of loop element 648, for each relevant capability, the context handling component 310 of the AI-driven action component 308 obtains the relevant context data that will subsequently be used. For example, the context handling component 310 loops through the relevant capabilities and obtains, for each one, the relevant data objects to enable further processing by the generative model 124. As mentioned, the relevant data objects to add can be determined based on the response from the generative model 124 to the classification call.

The method 600 proceeds to operation 626, where the generative AI access layer 134 generates a unique scenario object for each relevant capability for further processing (as indicated by loop element 650). Furthermore, for each relevant capability (as also indicated by the loop element 650), the generative AI access layer 134 adds the specific context data (e.g., obtained in operation 624), as well as input relevant to that capability (at operation 628), and triggers further AI consumption (at operation 630) to obtain a result (at operation 632) for that relevant capability. In some examples, only the portion of the input of operation 602 that is actually relevant to a particular capability is added to the scenario object for that capability.

In some examples, the generation of results for the respective capabilities is performed in parallel, or at least partially in parallel, by the generative AI access layer 134, the AI integration system 140, and the generative model 124.

As explained elsewhere, the generation of a final capability result can include not only transmitting a request to the generative model 124 and receiving a response, but also executing one or more intermediate operations, such as function calls that are performed by the generative AI access layer 134 to obtain further information from the database 138, or to generate intermediate results that are needed to generate final results. In some examples, the generative AI access layer 134 works with the generative model 124 to recursively execute function calls until a final capability result is obtained for a particular capability. Accordingly, for at least some of the capabilities, the generative AI access layer 134 may run intermediate operations as shown at operation 634 of FIG. 6B.

Once all final capability results are received (e.g., from a parallel processing operation), the results are consolidated at operation 636. For example, the generative AI access layer 134 consolidates the capability results into a list of actions that need to be processed. This enables the AI-driven action component 308 (e.g., the generative AI access layer result processing component 314 thereof) to retrieve all capability results in a single set (e.g., as a table of actions) at operation 638.

For each relevant capability (as indicated by loop element 652), the software application 132 then executes the capability using the capability result provided via the generative AI access layer 134 (at operation 640). For example, referring to the capabilities in the capabilities component 316, the AI-driven action component 308 loops through the table of actions corresponding to capability A 318 and capability B 320, respectively, and executes the corresponding functionality of the software application 132. The operations performed by the generative AI access layer 134 and the generative model 124 ensure that the software application 132 has the necessary information (e.g., object details and parameter values) execute the actions.

At operation 642, the software application 132 presents output at the user device 106 (e.g., within the web interface 116). As shown in FIG. 6B, if the user 108 provides a user selection confirming the output at operation 644, the software application 132 causes the output (e.g., an execution result, such as changes or updates made by executing the relevant functionality) to be persisted in the database 138 at operation 646. Alternatively, the user 108 can cause the changes or updates to be canceled.

Where the user 108 provided natural language input at operation 602, the method 600 thus enables the automated execution of capabilities in an intuitive manner, without the user 108 having to provide specific technical prompts (e.g., adhering to a specific syntax). The generative AI access layer 134 can also automatically retrieve information needed to execute the capabilities without the user 108 having to provide further detail.

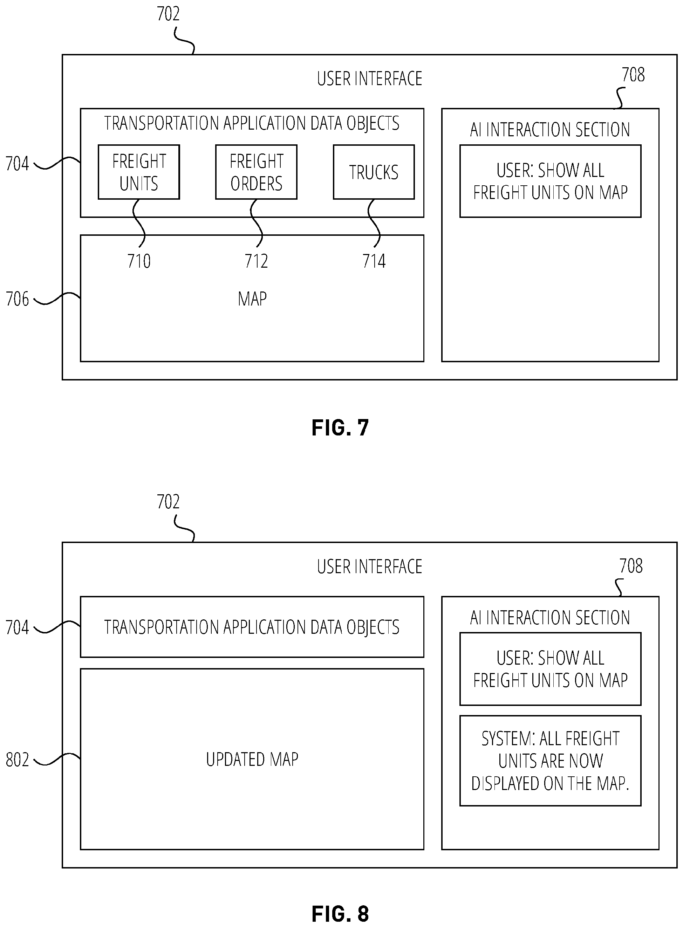

FIG. 7 to FIG. 10 each show a user interface 702, according to some examples. In these examples, the user interface 702 is that of a transportation management software application that is communicatively coupled to a generative AI access layer 134 as described in examples of the present disclosure. The user interface 702 can, for example, be the web interface 116 of the web client 114 of FIG. 1.

At a first stage shown in FIG. 7, the user 108 is presented with transportation application data objects 704 and a map 706 within the user interface 702. The user 108 can use these features to perform transportation resource planning activities. For example, the user 108 can use the transportation application data objects 704 and the map 706 to plan transportation requirements on capacity documents, while considering constraints and minimizing costs. Furthermore, the user interface 702 includes an AI interaction section 708 that allows the user to input natural language requests for processing.

In many cases, and as is the case in the examples of FIG. 7 to FIG. 10, various different entities are involved and can be updated or managed based on AI-driven interactions. For example, the transportation application data objects 704 include freight units 710, freight orders 712, and trucks 714, as shown in FIG. 7.

In FIG. 7, the user 108 inputs "show all freight units on map" within the AI interaction section 708. In response to the input, the generative AI access layer 134 automatically operates to identify a relevant capability corresponding to the input. For example, the generative AI access layer 134 identifies the relevant capability as "Highlight Units Visually." The generative AI access layer 134 generates a scenario for this capability and works with the generative model 124 to generate a capability result, which includes the information needed by the user interface 702 to execute the capability.

At a second stage shown in FIG. 8, the user 108 is presented with an updated map 802, reflecting an execution result of the "Highlight Units Visually" capability. For example, the freight units 710 of FIG. 7 are highlighted within the updated map 802. The transportation management software application also adds textual output in the AI interaction section 708, indicating "all freight units are now displayed on the map." The textual output can be generated using the generative model 124 or can automatically be provided by the transportation management software application as output corresponding to completion of the relevant capability.

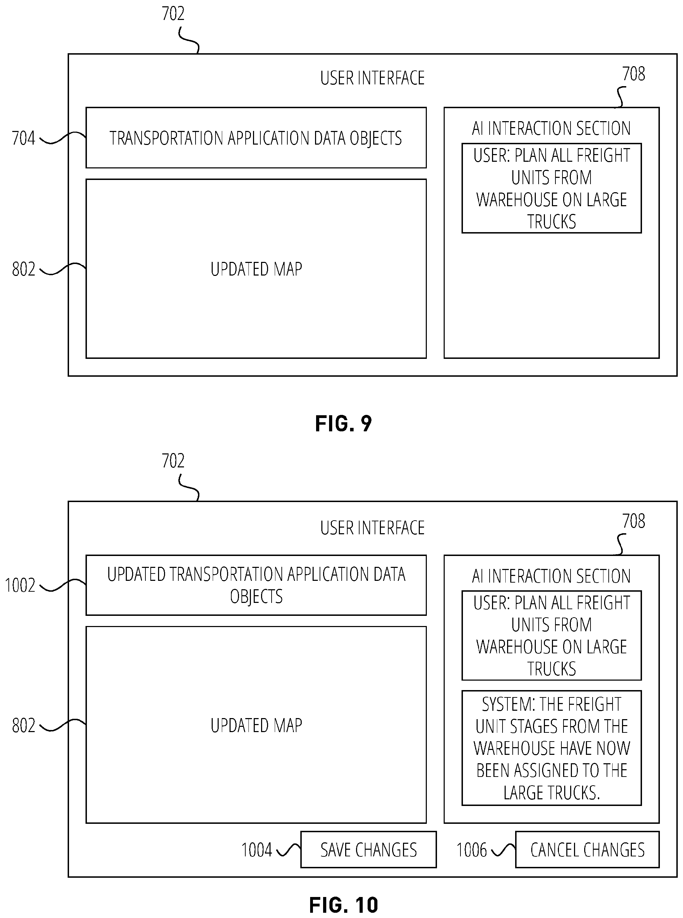

At a third stage shown in FIG. 9, the user 108 provides a new natural language input, namely "plan all freight units from warehouse on large trucks." Again, the generative AI access layer 134 automatically operates to identify a relevant capability corresponding to the new input. For example, the generative AI access layer 134 identifies the relevant capability as "Plan Selected Freight Units On Selected Trucks." The generative AI access layer 134 generates a scenario for this capability and works with the generative model 124 to generate a capability result, which includes the information needed by the user interface 702 to execute the capability.

At a fourth stage shown in FIG. 10, the user 108 is presented with updated transportation application data objects 1002, reflecting an execution result of the "Plan Selected Freight Units On Selected Trucks" capability. For example, one or more of the freight units 710, freight orders 712, and trucks 714 are updated, modified, or enriched to show, to the user 108, how the selected freight units have been automatically planned using the AI-driven functionality.

The transportation management software application also adds textual output in the AI interaction section 708, indicating "the freight unit stages from the warehouse have now been assigned to the large trucks." Furthermore, the user interface 702 presents a save changes button 1004 that can be selected to store the execution results (e.g., the updated transportation application data objects 1002), and cancel changes button 1006 that can be selected to cancel any changes or updates.

In view of the above-described implementations of subject matter this application discloses the following list of examples, wherein one feature of an example in isolation or more than one feature of an example, taken in combination and, optionally, in combination with one or more features of one or more further examples are further examples also falling within the disclosure of this application.

Example 1 is a system comprising: at least one memory that stores instructions; and one or more processors configured by the instructions to perform operations comprising: receiving input from a software application; in response to receiving the input, transmitting a request to a generative AI model to detect, based on first prompt data comprising the input, a relevant capability from among a plurality of supported capabilities of the software application; automatically generating, based on generative AI scenario settings for the relevant capability, second prompt data comprising context data accessible to the software application and at least a subset of the input; automatically generating a capability result for the relevant capability, the generating of the capability result being dynamically controlled using the generative AI scenario settings and comprising transmitting, to the generative AI model, at least one further request that includes, the second prompt data; and executing, by the software application, the relevant capability based on the capability result, the executing of the relevant capability causing presentation of output within a user interface of the software application.

In Example 2, the subject matter of Example 1 includes, wherein the input comprises natural language user input, and the output comprises an execution result of the relevant capability, the operations further comprising: generating the user interface of the software application to include a user input section; causing presentation of the user interface at a user device during a user session; receiving the natural language user input via the user input section; in response to receiving the natural language user input, generating the generative AI scenario settings for the user session; after presentation of the execution result within the user interface, receiving a user selection to confirm the execution result; and in response to receiving the user selection, persisting the execution result in a database.

In Example 3, the subject matter of any of Examples 1-2 includes, the operations further comprising: in response to receiving the input, accessing, from a database, a generative AI profile associated with the software application; and instantiating, based on the generative AI profile, a scenario object to define the generative AI scenario settings.

In Example 4, the subject matter of Example 3 includes, wherein the generative AI profile defines the plurality of supported capabilities of the software application, and further provides access to at least one of model settings or a plurality of prompt structures for dynamically interacting with the generative AI model.

In Example 5, the subject matter of any of Examples 1-4 includes, wherein the relevant capability is one of a plurality of relevant capabilities detected using the generative AI model, the operations comprising: generating a respective capability result for each of the plurality of relevant capabilities, the respective capability results being generated at least partially in parallel.

In Example 6, the subject matter of Example 5 includes, the operations further comprising, for each relevant capability of the plurality of relevant capabilities: instantiating a capability-specific scenario object for the relevant capability, the capability-specific scenario object comprising capability-specific scenario settings to control the generating of the respective capability result for the relevant capability.

In Example 7, the subject matter of Example 6 includes, wherein the generative AI model identifies, for each relevant capability of the plurality of relevant capabilities, the context data to be provided based on the capability-specific scenario settings, the operations further comprising: instantiating a context handling object to retrieve the context data from a context dataset associated with the software application.

In Example 8, the subject matter of any of Examples 5-7 includes, the operations further comprising: consolidating the respective capability results for the plurality of relevant capabilities into a structured set of capability results; and processing, by the software application, the structured set of capability results to cause execution of the plurality of relevant capabilities.

In Example 9, the subject matter of any of Examples 1-8 includes, wherein the relevant capability is one of a plurality of relevant capabilities detected using the generative AI model, and the generative AI model processes the user input, based on the first prompt data, to detect a first portion of the user input that is associated with a first capability of the plurality of relevant capabilities and a second portion of the user input that is associated with a second capability of the plurality of relevant capabilities.

In Example 10, the subject matter of any of Examples 1-9 includes, wherein the capability result comprises structured data that provides, to the software application, one or more parameter values for executing the relevant capability.

In Example 11, the subject matter of any of Examples 1-10 includes, wherein the generative AI scenario settings comprise prompt settings for generating prompt data and function call settings for handling automated function calls, the operations further comprising: executing at least one function call based on both the function call settings and a response received from the generative AI model.

In Example 12, the subject matter of Example 11 includes, wherein the executing of the at least one function call comprises recursively executing function calls to finalize the generating of the capability result.

In Example 13, the subject matter of any of Examples 1-12 includes, wherein the input comprises at least one of natural language user input received from the software application via a user device or automated system input received from the software application.

In Example 14, the subject matter of any of Examples 1-13 includes, wherein the software application is a transportation management software application, the context data comprises information related to one or more transportation data objects, and the relevant capability comprises at least one of scheduling, assigning, updating, adapting, or augmenting the one or more transportation data objects within a context of the software application.

Example 15 is a computer-implemented method performed by a computer system comprising a memory and at least one hardware processor, the computer-implemented method comprising: receiving input from a software application; in response to receiving the input, transmitting a request to a generative AI model to detect, based on first prompt data comprising the input, a relevant capability from among a plurality of supported capabilities of the software application; automatically generating, based on generative AI scenario settings for the relevant capability, second prompt data comprising context data accessible to the software application and at least a subset of the input; automatically generating a capability result for the relevant capability, the generating of the capability result being dynamically controlled using the generative AI scenario settings and comprising transmitting, to the generative AI model, at least one further request that includes, the second prompt data; and executing, by the software application, the relevant capability based on the capability result, the executing of the relevant capability causing presentation of output within a user interface of the software application.

In Example 16, the subject matter of Example 15 includes, wherein the input comprises natural language user input, and the output comprises an execution result of the relevant capability, the computer-implemented method further comprising: generating the user interface of the software application to include a user input section; causing presentation of the user interface at a user device during a user session; receiving the natural language user input via the user input section; in response to receiving the natural language user input, generating the generative AI scenario settings for the user session; after presentation of the execution result within the user interface, receiving a user selection to confirm the execution result; and in response to receiving the user selection, persisting the execution result in a database.

In Example 17, the subject matter of any of Examples 15-16 includes, in response to receiving the input, accessing, from a database, a generative AI profile associated with the software application; and instantiating, based on the generative AI profile, a scenario object to define the generative AI scenario settings.

Example 18 is one or more non-transitory computer-readable media storing computer-executable instructions that, when executed by a computing system, cause the computing system to perform operations comprising: receiving input from a software application; in response to receiving the input, transmitting a request to a generative AI model to detect, based on first prompt data comprising the input, a relevant capability from among a plurality of supported capabilities of the software application; automatically generating, based on generative AI scenario settings for the relevant capability, second prompt data comprising context data accessible to the software application and at least a subset of the input; automatically generating a capability result for the relevant capability, the generating of the capability result being dynamically controlled using the generative AI scenario settings and comprising transmitting, to the generative AI model, at least one further request that includes, the second prompt data; and executing, by the software application, the relevant capability based on the capability result, the executing of the relevant capability causing presentation of output within a user interface of the software application.

In Example 19, the subject matter of Example 18 includes, wherein the input comprises natural language user input, and the output comprises an execution result of the relevant capability, the operations further comprising: generating the user interface of the software application to include a user input section; causing presentation of the user interface at a user device during a user session; receiving the natural language user input via the user input section; in response to receiving the natural language user input, generating the generative AI scenario settings for the user session; after presentation of the execution result within the user interface, receiving a user selection to confirm the execution result; and in response to receiving the user selection, persisting the execution result in a database.

In Example 20, the subject matter of Examples 18-19 includes, the operations further comprising: in response to receiving the input, accessing, from a database, a generative AI profile associated with the software application; and instantiating, based on the generative AI profile, a scenario object to define the generative AI scenario settings.

Example 21 is at least one machine-readable medium including instructions that, when executed by processing circuitry, cause the processing circuitry to perform operations to implement any of Examples 1-20.

Example 22 is an apparatus comprising means to implement any of Examples 1-20.

Example 23 is a system to implement any of Examples 1-20.

Example 24 is a method to implement any of Examples 1-20.

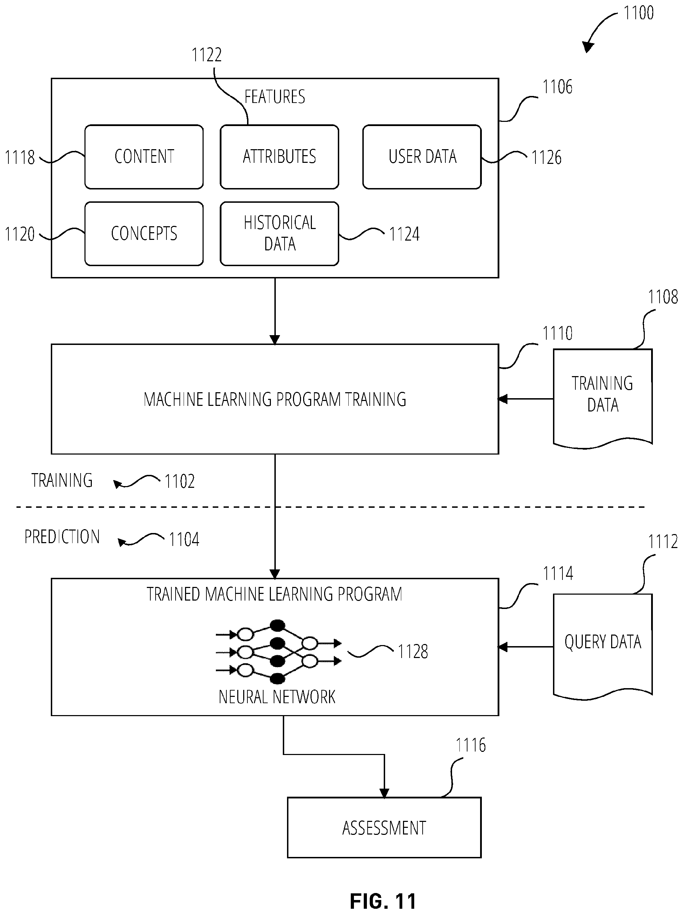

FIG. 11 is a block diagram showing a machine learning program 1100, according to some examples. Machine learning programs, also referred to as machine learning algorithms or tools, may be used as part of the systems described herein to perform one or more operations.

Machine learning is a field of study that gives computers the ability to learn without being explicitly programmed. Machine learning explores the study and construction of algorithms, also referred to herein as tools, that may learn from or be trained using existing data and make predictions about or based on new data. Such machine learning tools operate by building a model from example training data 1108 in order to make data-driven predictions or decisions expressed as outputs or assessments (e.g., assessment 1116). Although examples are presented with respect to a few machine learning tools, the principles presented herein may be applied to other machine learning tools.

In some examples, different machine learning tools may be used. For example, Logistic Regression (LR), Naive-Bayes, Random Forest (RF), neural networks (NN), matrix factorization, and Support Vector Machines (SVM) tools may be used.

Two common types of problems in machine learning are classification problems and regression problems. Classification problems, also referred to as categorization problems, aim at classifying items into one of several category values (for example, is this object an apple or an orange?). Regression algorithms aim at quantifying some items (for example, by providing a value that is a real number).

The machine learning program 1100 supports two types of phases, namely training phases 1102 and prediction phases 1104. In training phases 1102, supervised learning, unsupervised or reinforcement learning may be used. For example, the machine learning program 1100 (1) receives features 1106 (e.g., as structured or labeled data in supervised learning) and/or (2) identifies features 1106 (e.g., unstructured or unlabeled data for unsupervised learning) in training data 1108. In prediction phases 1104, the machine learning program 1100 uses the features 1106 for analyzing query data 1112 to generate outcomes or predictions, as examples of an assessment 1116.

In the training phase 1102, feature engineering is used to identify features 1106 and may include identifying informative, discriminating, and independent features for the effective operation of the machine learning program 1100 in pattern recognition, classification, and regression. In some examples, the training data 1108 includes labeled data, which is known data for pre-identified features 1106 and one or more outcomes. Each of the features 1106 may be a variable or attribute, such as individual measurable property of a process, article, system, or phenomenon represented by a data set (e.g., the training data 1108). Features 1106 may also be of different types, such as numeric features, strings, and graphs, and may include one or more of content 1118, concepts 1120, attributes 1122, historical data 1124 and/or user data 1126, merely for example.

The concept of a feature in this context is related to that of an explanatory variable used in statistical techniques such as linear regression. Choosing informative, discriminating, and independent features is important for the effective operation of the machine learning program 1100 in pattern recognition, classification, and regression. Features may be of different types, such as numeric features, strings, and graphs.

In training phases 1102, the machine learning program 1100 uses the training data 1108 to find correlations among the features 1106 that affect a predicted outcome or assessment 1116. With the training data 1108 and the identified features 1106, the machine learning program 1100 is trained during the training phase 1102 at machine learning program training 1110. The machine learning program 1100 appraises values of the features 1106 as they correlate to the training data 1108. The result of the training is the trained machine learning program 1114 (e.g., a trained or learned model).

Further, the training phases 1102 may involve machine learning, in which the training data 1108 is structured (e.g., labeled during preprocessing operations), and the trained machine learning program 1114 implements a relatively simple neural network 1128 capable of performing, for example, classification and clustering operations. In other examples, the training phase 1102 may involve deep learning, in which the training data 1108 is unstructured, and the trained machine learning program 1114 implements a deep neural network 1128 that is able to perform both feature extraction and classification/clustering operations.

A neural network 1128 generated during the training phase 1102, and implemented within the trained machine learning program 1114, may include a hierarchical (e.g., layered) organization of neurons. For example, neurons (or nodes) may be arranged hierarchically into a number of layers, including an input layer, an output layer, and multiple hidden layers. Each of the layers within the neural network 1128 can have one or many neurons and each of these neurons operationally computes a small function (e.g., activation function). For example, if an activation function generates a result that transgresses a particular threshold, an output may be communicated from that neuron (e.g., transmitting neuron) to a connected neuron (e.g., receiving neuron) in successive layers. Connections between neurons also have associated weights, which defines the influence of the input from a transmitting neuron to a receiving neuron.

In some examples, the neural network 1128 may also be one of a number of different types of neural networks, including a single-layer feed-forward network, an Artificial Neural Network (ANN), a Recurrent Neural Network (RNN), a symmetrically connected neural network, and unsupervised pre-trained network, a transformer network, a Convolutional Neural Network (CNN), or a Recursive Neural Network (RNN), merely for example.

During prediction phases 1104, the trained machine learning program 1114 is used to perform an assessment. Query data 1112 is provided as an input to the trained machine learning program 1114, and the trained machine learning program 1114 generates the assessment 1116 as output, responsive to receipt of the query data 1112.

In some examples, the trained machine learning program 1114 may comprise a generative AI model. Generative AI is a term that may refer to AI that can create new content. For example, generative AI can produce text, images, video, audio, code, or synthetic data.

Some of the techniques that may be used in, or together with, generative AI are:
- GANs: GANs may include two neural networks: a generator and a discriminator. The generator network attempts to create realistic content that can "fool" the discriminator network, while the discriminator network attempts to distinguish between real and fake content. The generator and discriminator networks compete with each other and improve over time.
- Variational autoencoders (VAEs): VAEs may encode input data into a latent space (e.g., a compressed representation) and then decode it back into output data. The latent space can be manipulated to generate new variations of the output data. VAEs may use self-attention mechanisms to process input data, allowing them to handle long text sequences and capture complex dependencies.
- Transformer models: Transformer models may use attention mechanisms to learn the relationships between different parts of input data (such as words or pixels) and generate output data based on these relationships. Transformer-based models can handle sequential data, such as text or speech, as well as non-sequential data, such as images or code. For example, an LLM, which is an example of a generative AI model, may be a transformer model, or may be based on a transformer model. Non-limiting examples of LLMs that use transformer models include GPT-4 (Generative Pre-trained Transformer 4) developed by OpenAI^{™}, BERT (Bidirectional Encoder Representations from Transformers) developed by Google^{™}, LLaMA (Large Language Model Meta AI) developed by Meta^{™}, PaLM2 (Pathways Language Model 2) developed by Google^{™}, and Claude 3 developed by Anthropic^{™}.

In generative AI examples, the assessment 1116 generated as a response or output by the trained machine learning program 1114 may include predictions, translations, summaries, answers to questions, suggestions, media content, or combinations thereof.

In some examples, a machine learning model may be fine-tuned. The term "fine-tuning," as used herein, generally refers to a process of adapting a pre-trained or "base" machine learning model. For example, a machine learning model may be adapted to improve its performance on a specific task or to make it more suitable for a specific operation. Fine-tuning techniques may include one or more of updating or changing a pre-trained model's internal parameters through additional training, injecting new trainable weights or layers into the model architecture and training on those weights or layers, modifying a model topology by altering layers or connections, changing aspects of the training process (such as loss functions or optimization methods), or any other adaptations that may, for example, result in better model performance on a particular task compared to the pre-trained model.

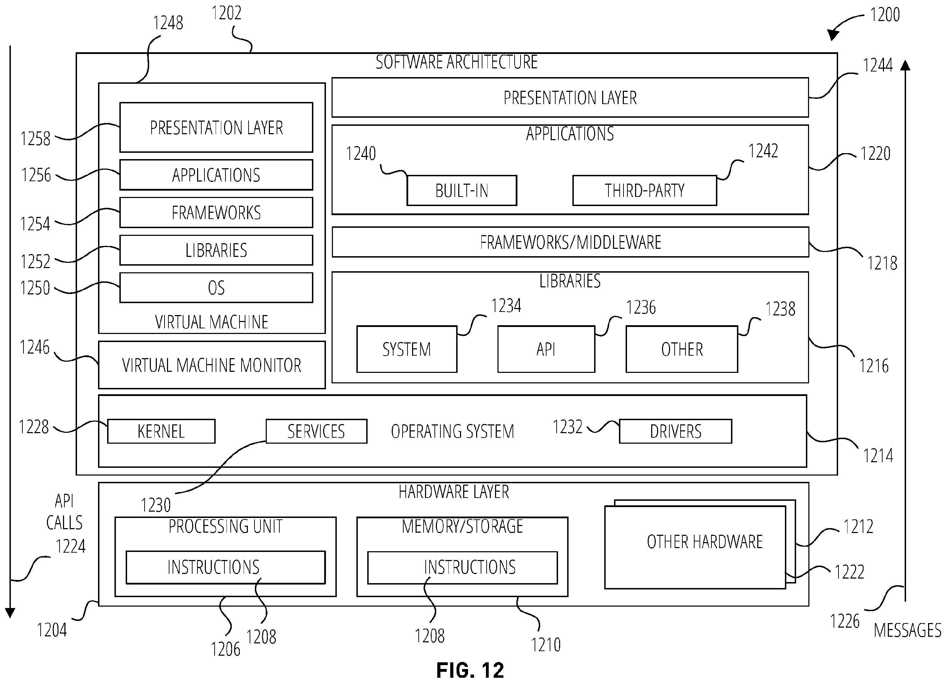

FIG. 12 is a block diagram 1200 showing a software architecture 1202 for a computing device, according to some examples. The software architecture 1202 may be used in conjunction with various hardware architectures, for example, as described herein. FIG. 12 is merely a non-limiting illustration of a software architecture, and many other architectures may be implemented to facilitate the functionality described herein. A representative hardware layer 1204 is illustrated and can represent, for example, any of the above referenced computing devices. In some examples, the hardware layer 1204 may be implemented according to the architecture of the computer system of FIG. 13.

The representative hardware layer 1204 comprises one or more processing units 1206 having associated executable instructions 1208. Executable instructions 1208 represent the executable instructions of the software architecture 1202, including implementation of the methods, modules, subsystems, and components, and so forth described herein and may also include memory and/or storage modules 1210, which also have executable instructions 1208. Hardware layer 1204 may also comprise other hardware as indicated by other hardware 1212 and other hardware 1222 which represent any other hardware of the hardware layer 1204, such as the other hardware illustrated as part of the software architecture 1202.

In the architecture of FIG. 12, the software architecture 1202 may be conceptualized as a stack of layers where each layer provides particular functionality. For example, the software architecture 1202 may include layers such as an operating system 1214, libraries 1216, frameworks/middleware layer 1218, applications 1220, and presentation layer 1244. Operationally, the applications 1220 or other components within the layers may invoke API calls 1224 through the software stack and access a response, returned values, and so forth illustrated as messages 1226 in response to the API calls 1224. The layers illustrated are representative in nature and not all software architectures have all layers. For example, some mobile or special purpose operating systems may not provide a frameworks/middleware layer 1218, while others may provide such a layer. Other software architectures may include additional or different layers.

The operating system 1214 may manage hardware resources and provide common services. The operating system 1214 may include, for example, a kernel 1228, services 1230, and drivers 1232. The kernel 1228 may act as an abstraction layer between the hardware and the other software layers. For example, the kernel 1228 may be responsible for memory management, processor management (e.g., scheduling), component management, networking, security settings, and so on. The services 1230 may provide other common services for the other software layers. In some examples, the services 1230 include an interrupt service. The interrupt service may detect the receipt of an interrupt and, in response, cause the software architecture 1202 to pause its current processing and execute an interrupt service routine (ISR) when an interrupt is accessed.

The drivers 1232 may be responsible for controlling or interfacing with the underlying hardware. For instance, the drivers 1232 may include display drivers, camera drivers, Bluetooth^{®} drivers, flash memory drivers, serial communication drivers (e.g., Universal Serial Bus (USB) drivers), Wi-Fi^{®} drivers, near-field communication (NFC) drivers, audio drivers, power management drivers, and so forth depending on the hardware configuration.

The libraries 1216 may provide a common infrastructure that may be utilized by the applications 1220 or other components or layers. The libraries 1216 typically provide functionality that allows other software modules to perform tasks in an easier fashion than to interface directly with the underlying operating system 1214 functionality (e.g., kernel 1228, services 1230 or drivers 1232). The libraries 1216 may include system libraries 1234 (e.g., C standard library) that may provide functions such as memory allocation functions, string manipulation functions, mathematic functions, and the like. In addition, the libraries 1216 may include API libraries 1236 such as media libraries (e.g., libraries to support presentation and manipulation of various media format such as MPEG4, H.264, MP3, AAC, AMR, JPG, PNG), graphics libraries (e.g., an OpenGL framework that may be used to render two-dimensional and three-dimensional in a graphic content on a display), database libraries (e.g., SQLite that may provide various relational database functions), web libraries (e.g., WebKit that may provide web browsing functionality), and the like. The libraries 1216 may also include a wide variety of other libraries 1238 to provide many other APIs to the applications 1220 and other software components/modules.

The frameworks/middleware layer 1218 may provide a higher-level common infrastructure that may be utilized by the applications 1220 or other software components/modules. For example, the frameworks/middleware layer 1218 may provide various graphic user interface (GUI) functions, high-level resource management, high-level location services, and so forth. The frameworks/middleware layer 1218 may provide a broad spectrum of other APIs that may be utilized by the applications 1220 or other software components/modules, some of which may be specific to a particular operating system or platform.

The applications 1220 include built-in applications 1240 or third-party applications 1242. Examples of representative built-in applications 1240 may include, but are not limited to, a contacts application, a browser application, a book reader application, a location application, a media application, a messaging application, or a game application. Third-party applications 1242 may include any of the built-in applications as well as a broad assortment of other applications. In a specific example, the third-party application 1242 (e.g., an application developed using the Android^{™} or iOS^{™} software development kit (SDK) by an entity other than the vendor of the particular platform) may be mobile software running on a mobile operating system such as iOS^{™}, Android^{™}, Windows^{®} Phone, or other mobile computing device operating systems. In this example, the third-party application 1242 may invoke the API calls 1224 provided by the mobile operating system such as operating system 1214 to facilitate functionality described herein.

The applications 1220 may utilize built in operating system functions (e.g., kernel 1228, services 1230 or drivers 1232), libraries (e.g., system libraries 1234, API libraries 1236, and other libraries 1238), and frameworks/middleware layer 1218 to create user interfaces to interact with users of the system. Alternatively, or additionally, in some systems, interactions with a user may occur through a presentation layer, such as presentation layer 1244. In these systems, the application/module "logic" can be separated from the aspects of the application/module that interact with a user.

Some software architectures utilize virtual machines. In the example of FIG. 12, this is illustrated by virtual machine 1248. A virtual machine creates a software environment where applications/modules can execute as if they were executing on a hardware computing device. A virtual machine is hosted by a host operating system (operating system 1214) and typically, although not always, has a virtual machine monitor 1246, which manages the operation of the virtual machine as well as the interface with the host operating system (e.g., operating system 1214). A software architecture executes within the virtual machine 1248 such as an operating system 1250, libraries 1252, frameworks/middleware 1254, applications 1256 or presentation layer 1258. These layers of software architecture executing within the virtual machine 1248 can be the same as corresponding layers previously described or may be different.

Certain examples are described herein as including logic or a number of components, modules, or mechanisms. Modules or components may constitute either software modules/components (e.g., code embodied (1) on a non-transitory machine-readable medium or (2) in a transmission signal) or hardware-implemented modules/components. A hardware-implemented module/component is a tangible unit capable of performing certain operations and may be configured or arranged in a certain manner. In examples, one or more computer systems (e.g., a standalone, client, or server computer system) or one or more hardware processors may be configured by software (e.g., an application or application portion) as a hardware-implemented module/component that operates to perform certain operations as described herein.

In various examples, a hardware-implemented module/component may be implemented mechanically or electronically. For example, a hardware-implemented module/component may comprise dedicated circuitry or logic that is permanently configured (e.g., as a special-purpose processor, such as a field programmable gate array (FPGA) or an application-specific integrated circuit (ASIC)) to perform certain operations. A hardware-implemented module/component may also comprise programmable logic or circuitry (e.g., as encompassed within a general-purpose processor or another programmable processor) that is temporarily configured by software to perform certain operations.

Accordingly, the term "hardware-implemented module" or "hardware-implemented component" should be understood to encompass a tangible entity, be that an entity that is physically constructed, permanently configured (e.g., hardwired), or temporarily or transitorily configured (e.g., programmed) to operate in a certain manner or to perform certain operations described herein. Considering examples in which hardware-implemented modules/components are temporarily configured (e.g., programmed), each of the hardware-implemented modules/components need not be configured or instantiated at any one instance in time. For example, where the hardware-implemented modules/components comprise, a general-purpose processor configured using software, the general-purpose processor may be configured as respective different hardware-implemented modules/components at different times. Software may accordingly configure a processor, for example, to constitute a particular hardware-implemented module/component at one instance of time and to constitute a different hardware-implemented module/component at a different instance of time.

Hardware-implemented modules/components can provide information to, and receive information from, other hardware-implemented modules/components. Accordingly, the described hardware-implemented modules/components may be regarded as being communicatively coupled. Where multiple of such hardware-implemented modules/components exist contemporaneously, communications may be achieved through signal transmission (e.g., over appropriate circuits and buses that connect the hardware-implemented modules/components). In examples in which multiple hardware-implemented modules/components are configured or instantiated at different times, communications between such hardware-implemented modules/components may be achieved, for example, through the storage and retrieval of information in memory structures to which the multiple hardware-implemented modules/components have access. For example, one hardware-implemented module/component may perform an operation, and store the output of that operation in a memory device to which it is communicatively coupled. A further hardware-implemented module/component may then, at a later time, access the memory device to retrieve and process the stored output.

The various operations of example methods described herein may be performed, at least partially, by one or more processors that are temporarily configured (e.g., by software) or permanently configured to perform the relevant operations. Whether temporarily or permanently configured, such processors may constitute processor-implemented modules/components that operate to perform one or more operations or functions. The modules/components referred to herein may, in some examples, comprise processor-implemented modules/components.

Similarly, the methods described herein may be at least partially processor-implemented. For example, at least some of the operations of a method may be performed by one or more processors or processor-implemented modules/components. The performance of certain of the operations may be distributed among the one or more processors, not only residing within a single machine, but deployed across a number of machines.

The one or more processors may also operate to support performance of the relevant operations in a "cloud computing" environment or as a "software as a service (SaaS)." For example, at least some of the operations may be performed by a group of computers (as examples of machines including processors), these operations being accessible via a network (e.g., the Internet) and via one or more appropriate interfaces (e.g., APIs).

Examples may be implemented in digital electronic circuitry, or in computer hardware, firmware, or software, or in combinations of them. Examples may be implemented using a computer program product, e.g., a computer program tangibly embodied in an information carrier, e.g., in a machine-readable medium for execution by, or to control the operation of, data processing apparatus, e.g., a programmable processor, a computer, or multiple computers.

A computer program can be written in any form of programming language, including compiled or interpreted languages, and it can be deployed in any form, including as a standalone program or as a module, subroutine, or other unit suitable for use in a computing environment. A computer program can be deployed to be executed on one computer or on multiple computers at one site or distributed across multiple sites and interconnected by a communication network.

FIG. 13 is a block diagram of a machine in the example form of a computer system 1300 within which instructions 1324 may be executed for causing the machine to perform any one or more of the methodologies discussed herein. In alternative examples, the machine operates as a standalone device or may be connected (e.g., networked) to other machines. In a networked deployment, the machine may operate in the capacity of a server or a client machine in server-client network environment, or as a peer machine in a peer-to-peer (or distributed) network environment. The machine may be a personal computer (PC), a tablet PC, a set-top box (STB), a personal digital assistant (PDA), a cellular telephone, a web appliance, a network router, switch, or bridge, or any machine capable of executing instructions (sequential or otherwise) that specify actions to be taken by that machine. Further, while only a single machine is illustrated, the term "machine" shall also be taken to include any collection of machines that individually or jointly execute a set (or multiple sets) of instructions to perform any one or more of the methodologies discussed herein.

The example computer system 1300 includes a processor 1302 (e.g., a central processing unit (CPU), a GPU, or both), a primary or main memory 1304, and a static memory 1306, which communicate with each other via a bus 1308. The computer system 1300 may further include a video display unit 1310 (e.g., a liquid crystal display (LCD) or a cathode ray tube (CRT)). The computer system 1300 also includes an alphanumeric input device 1312 (e.g., a keyboard or a touch-sensitive display screen), a UI navigation (or cursor control) device 1314 (e.g., a mouse), a storage unit 1316, a signal generation device 1318 (e.g., a speaker), and a network interface device 1320.

As used herein, the term "processor" may refer to any one or more circuits or virtual circuits (e.g., a physical circuit emulated by logic executing on an actual processor) that manipulates data values according to control signals (e.g., commands, opcodes, machine code, control words, macroinstructions, etc.) and which produces corresponding output signals that are applied to operate a machine. A processor may, for example, include at least one of a Central Processing Unit (CPU), a Reduced Instruction Set Computing (RISC) Processor, a Complex Instruction Set Computing (CISC) Processor, a Graphics Processing Unit (GPU), a Digital Signal Processor (DSP), a Tensor Processing Unit (TPU), a Neural Processing Unit (NPU), a Vision Processing Unit (VPU), a Machine Learning Accelerator, an Artificial Intelligence Accelerator, an Application Specific Integrated Circuit (ASIC), a Field Programmable Gate Array (FPGA), a Radio-Frequency Integrated Circuit (RFIC), a Neuromorphic Processor, a Quantum Processor, or any combination thereof. A processor may be a multi-core processor having two or more independent processors (sometimes referred to as "cores") that may execute instructions contemporaneously. Multi-core processors may contain multiple computational cores on a single integrated circuit die, each of which can independently execute program instructions in parallel. Parallel processing on multi-core processors may be implemented via architectures like superscalar, VLIW, vector processing, or SIMD that allow each core to run separate instruction streams concurrently. A processor may be emulated in software, running on a physical processor, as a virtual processor or virtual circuit. The virtual processor may behave like an independent processor but is implemented in software rather than hardware.

The storage unit 1316 includes a machine-readable medium 1322 on which is stored one or more sets of data structures and instructions 1324 (e.g., software) embodying or utilized by any one or more of the methodologies or functions described herein. The instructions 1324 may also reside, completely or at least partially, within the main memory 1304 or within the processor 1302 during execution thereof by the computer system 1300, with the main memory 1304 and the processor 1302 also each constituting a machine-readable medium 1322.

While the machine-readable medium 1322 is shown in accordance with some examples to be a single medium, the term "machine-readable medium" may include a single medium or multiple media (e.g., a centralized or distributed database, or associated caches and servers) that store the one or more instructions 1324 or data structures. The term "machine-readable medium" shall also be taken to include any tangible medium that is capable of storing, encoding, or carrying instructions 1324 for execution by the machine and that cause the machine to perform any one or more of the methodologies of the present disclosure, or that is capable of storing, encoding, or carrying data structures utilized by or associated with such instructions 1324. The term "machine-readable medium" shall accordingly be taken to include, but not be limited to, solid-state memories, and optical and magnetic media. Specific examples of a machine-readable medium 1322 include non-volatile memory, including by way of example semiconductor memory devices, e.g., erasable programmable read-only memory (EPROM), electrically erasable programmable read-only memory (EEPROM), and flash memory devices; magnetic disks such as internal hard disks and removable disks; magnetooptical disks; and compact disc read-only memory (CD-ROM) and digital versatile disc read-only memory (DVD-ROM) disks. A machine-readable medium is not a transmission medium.

The instructions 1324 may further be transmitted or received over a communications network 1326 using a transmission medium. The instructions 1324 may be transmitted using the network interface device 1320 and any one of a number of well-known transfer protocols (e.g., hypertext transport protocol (HTTP)). Examples of communication networks include a local area network (LAN), a wide area network (WAN), the Internet, mobile telephone networks, plain old telephone (POTS) networks, and wireless data networks (e.g., Wi -Fi and Wi-Max networks). The term "transmission medium" shall be taken to include any intangible medium that is capable of storing, encoding, or carrying instructions 1324 for execution by the machine, and includes digital or analog communications signals or other intangible media to facilitate communication of such software.

Although specific examples are described herein, it will be evident that various modifications and changes may be made to these examples without departing from the broader spirit and scope of the disclosure. Accordingly, the specification and drawings are to be regarded in an illustrative rather than a restrictive sense. The accompanying drawings that form a part hereof show by way of illustration, and not of limitation, specific examples in which the subject matter may be practiced. The examples illustrated are described in sufficient detail to enable those skilled in the art to practice the teachings disclosed herein. Other examples may be utilized and derived therefrom, such that structural and logical substitutions and changes may be made without departing from the scope of this disclosure. This detailed description, therefore, is not to be taken in a limiting sense, and the scope of various examples is defined only by the appended claims, along with the full range of equivalents to which such claims are entitled.

Such examples of the subject matter may be referred to herein, individually or collectively, by the term "example" merely for convenience and without intending to voluntarily limit the scope of this application to any single example or concept if more than one is in fact disclosed. Thus, although specific examples have been illustrated and described herein, it should be appreciated that any arrangement calculated to achieve the same purpose may be substituted for the specific examples shown. This disclosure is intended to cover any and all adaptations or variations of various examples. Combinations of the above examples, and other examples not specifically described herein, will be apparent to those of skill in the art upon reviewing the above description.

Some portions of the subject matter discussed herein may be presented in terms of algorithms or symbolic representations of operations on data stored as bits or binary digital signals within a machine memory (e.g., a computer memory). Such algorithms or symbolic representations are examples of techniques used by those of ordinary skill in the data processing arts to convey the substance of their work to others skilled in the art. As used herein, an "algorithm" is a self-consistent sequence of operations or similar processing leading to a desired result. In this context, algorithms and operations involve physical manipulation of physical quantities. Typically, but not necessarily, such quantities may take the form of electrical, magnetic, or optical signals capable of being stored, accessed, transferred, combined, compared, or otherwise manipulated by a machine. It is convenient at times, principally for reasons of common usage, to refer to such signals using words such as "data," "content," "bits," "values," "elements," "symbols," "characters," "terms," "numbers," "numerals," or the like. These words, however, are merely convenient labels and are to be associated with appropriate physical quantities.

Unless specifically stated otherwise, discussions herein using words such as "processing," "computing," "calculating," "determining," "presenting," "displaying," or the like may refer to actions or processes of a machine (e.g., a computer) that manipulates or transforms data represented as physical (e.g., electronic, magnetic, or optical) quantities within one or more memories (e.g., volatile memory, non-volatile memory, or any suitable combination thereof), registers, or other machine components that receive, store, transmit, or display information. Furthermore, unless specifically stated otherwise, the terms "a" and "an" are herein used, as is common in patent documents, to include one or more than one instance.

Unless the context clearly requires otherwise, throughout the description and the claims, the words "comprise," "comprising," and the like are to be construed in an inclusive sense, as opposed to an exclusive or exhaustive sense, e.g., in the sense of "including, but not limited to." As used herein, the terms "connected," "coupled," or any variant thereof means any connection or coupling, either direct or indirect, between two or more elements; the coupling or connection between the elements can be physical, logical, or a combination thereof. Additionally, the words "herein," "above," "below," and words of similar import, when used in this application, refer to this application as a whole and not to any particular portions of this application. Where the context permits, words using the singular or plural number may also include the plural or singular number, respectively. Except as otherwise indicated, the word "or" in reference to a list of two or more items, covers all of the following interpretations of the word: any one of the items in the list, all of the items in the list, and any combination of the items in the list.

Although some examples, such as those depicted in the drawings, include a particular sequence of operations, the sequence may be altered without departing from the scope of the present disclosure. For example, some of the operations depicted may be performed in parallel or in a different sequence that does not materially affect the functions as described in the examples. In other examples, different components of an example device or system that implements an example method may perform functions at substantially the same time or in a specific sequence. The term "operation" is used to refer to elements in the drawings of this disclosure for ease of reference and it will be appreciated that each "operation" may identify one or more operations, processes, actions, or steps, and may be performed by one or multiple components.

## Claims

1. A system comprising:
at least one memory that stores instructions; and
one or more processors configured by the instructions to perform operations comprising:
receiving input from a software application;
in response to receiving the input, transmitting a request to a generative artificial intelligence (AI) model to detect, based on first prompt data comprising the input, a relevant capability from among a plurality of supported capabilities of the software application;
automatically generating, based on generative AI scenario settings for the relevant capability, second prompt data comprising context data accessible to the software application and at least a subset of the input;
automatically generating a capability result for the relevant capability, the generating of the capability result being dynamically controlled using the generative AI scenario settings and comprising transmitting, to the generative AI model, at least one further request that includes the second prompt data; and
executing, by the software application, the relevant capability based on the capability result, the executing of the relevant capability causing presentation of output within a user interface of the software application.

2. The system of claim 1, wherein the input comprises natural language user input, and the output comprises an execution result of the relevant capability, the operations further comprising:
generating the user interface of the software application to include a user input section;
causing presentation of the user interface at a user device during a user session;
receiving the natural language user input via the user input section;
in response to receiving the natural language user input, generating the generative AI scenario settings for the user session;
after presentation of the execution result within the user interface, receiving a user selection to confirm the execution result; and
in response to receiving the user selection, persisting the execution result in a database.

3. The system of claim 1 or 2, the operations further comprising:
in response to receiving the input, accessing, from a database, a generative AI profile associated with the software application; and
instantiating, based on the generative AI profile, a scenario object to define the generative AI scenario settings;
wherein the generative AI profile may define the plurality of supported capabilities of the software application, and may further provide access to at least one of model settings or a plurality of prompt structures for dynamically interacting with the generative AI model.

4. The system of any one of the preceding claims, wherein the relevant capability is one of a plurality of relevant capabilities detected using the generative AI model, the operations comprising:
generating a respective capability result for each of the plurality of relevant capabilities, the respective capability results being generated at least partially in parallel.

5. The system of claim 4, the operations further comprising, for each relevant capability of the plurality of relevant capabilities:
instantiating a capability-specific scenario object for the relevant capability, the capability-specific scenario object comprising capability-specific scenario settings to control the generating of the respective capability result for the relevant capability;
wherein the generative AI model may identify, for each relevant capability of the plurality of relevant capabilities, the context data to be provided based on the capability - specific scenario settings, wherein the operations may further comprise:
instantiating a context handling object to retrieve the context data from a context dataset associated with the software application.

6. The system of claim 4 or 5, the operations further comprising:
consolidating the respective capability results for the plurality of relevant capabilities into a structured set of capability results; and
processing, by the software application, the structured set of capability results to cause execution of the plurality of relevant capabilities.

7. The system of any one of the preceding claims, wherein the relevant capability is one of a plurality of relevant capabilities detected using the generative AI model, and the generative AI model processes the user input, based on the first prompt data, to detect a first portion of the user input that is associated with a first capability of the plurality of relevant capabilities and a second portion of the user input that is associated with a second capability of the plurality of relevant capabilities.

8. The system of any one of the preceding claims, wherein the capability result comprises structured data that provides, to the software application, one or more parameter values for executing the relevant capability.

9. The system of any one of the preceding claims, wherein the generative AI scenario settings comprise prompt settings for generating prompt data and function call settings for handling automated function calls, the operations further comprising:
executing at least one function call based on both the function call settings and a response received from the generative AI model;
wherein the executing of the at least one function call may comprise recursively executing function calls to finalize the generating of the capability result.

10. The system of any one of the preceding claims, wherein the input comprises at least one of natural language user input received from the software application via a user device or automated system input received from the software application.

11. The system of any one of the preceding claims, wherein the software application is a transportation management software application, the context data comprises information related to one or more transportation data objects, and the relevant capability comprises at least one of scheduling, assigning, updating, adapting, or augmenting the one or more transportation data objects within a context of the software application.

12. A computer-implemented method performed by a computer system comprising a memory and at least one hardware processor, the computer-implemented method comprising:
receiving input from a software application;
in response to receiving the input, transmitting a request to a generative artificial intelligence (AI) model to detect, based on first prompt data comprising the input, a relevant capability from among a plurality of supported capabilities of the software application;
automatically generating, based on generative AI scenario settings for the relevant capability, second prompt data comprising context data accessible to the software application and at least a subset of the input;
automatically generating a capability result for the relevant capability, the generating of the capability result being dynamically controlled using the generative AI scenario settings and comprising transmitting, to the generative AI model, at least one further request that includes the second prompt data; and
executing, by the software application, the relevant capability based on the capability result, the executing of the relevant capability causing presentation of output within a user interface of the software application.

13. The computer-implemented method of claim 12, wherein the input comprises natural language user input, and the output comprises an execution result of the relevant capability, the computer-implemented method further comprising:
generating the user interface of the software application to include a user input section;
causing presentation of the user interface at a user device during a user session;
receiving the natural language user input via the user input section;
in response to receiving the natural language user input, generating the generative AI scenario settings for the user session;
after presentation of the execution result within the user interface, receiving a user selection to confirm the execution result; and
in response to receiving the user selection, persisting the execution result in a database.

14. The computer-implemented method of claim 12 or 13, further comprising:
in response to receiving the input, accessing, from a database, a generative AI profile associated with the software application; and
instantiating, based on the generative AI profile, a scenario object to define the generative AI scenario settings.

15. One or more transitory or non-transitory computer-readable media storing computer-executable instructions that, when executed by a computing system, cause the computing system to perform operations according to any one of claims 12 to 14.
